# EUROPEAN PATENT APPLICATION

(11) **EP 1 758 308 A1**
(43) Date of publication of application: **28.02.2007**
(21) Application number: 05751361.6
(22) Date of filing: 06.06.2005
(51) Int. Cl.: H04L 12/28, G01S 11/14

(54) **DISTANCE MEASUREMENT SYSTEM, DISTANCE MEASUREMENT METHOD, INFORMATION PROCESSING DEVICE, PROGRAM, AND RECORDING MEDIUM**

(30) Priority: 09.06.2004 JP 2004171433
(71) Applicant: International Business Machines Corporation, Armonk, New York 10504 (US)
(72) Inventor: MIZUTANI, Akihiko, Tokyo Res. Lab. IBM Japan Ltd, Yamato-shi, Kanagawa 2428502 (JP); SHIMOTONO, Susumu, Tokyo Res. Lab. IBM Japan Ltd, Yamato-shi, Kanagawa 2428502 (JP)
(74) Representative: Williams, Julian David
(86) International application number: PCT/JP2005/010369
(87) International publication number: WO 2005/122483

(57) **Abstract**

[Object]

An object of the present invention is to obtain the distance between multiple information processing apparatuses with a high accuracy.

[Solution]

There is provided a distance measuring system for measuring the distance between a first information processing apparatus and a second information processing apparatus. The system includes a time synchronizing part for synchronizing the reference time of the first information processing apparatus with the reference time of the second information processing apparatus, the reference time being used for measuring the distance; a sound signal transmitting part for transmitting a sound signal from the first informationprocessing apparatus to the second information processing apparatus in a state where the reference time of the first information processing apparatus and the reference time of the second information processing apparatus is in synchronization with each other; and a distance calculating part for calculating the distance between the first information processing apparatus and the second information processing apparatus on the basis of the sound transmission timing that is determined on the basis of the reference time of the first information processing apparatus and at which the sound signal has been transmitted and the sound reception timing at which the sound signal has been received and which is identified by the second information processing apparatus on the basis of the reference time.

## Description

### [Field of the invention]

The present invention relates to a distance measuring system, a distance measuring method, an information processing apparatus, a program and a recording medium. More particularly, this invention relates to a distance measuring system, a distance measuring method, an information processing apparatus, a program and a recording medium in which the distance between a first information processing apparatus and a second information processing apparatus that exist in the neighborhood is measured.

### [Background of the invention]

A technology has been disclosed that obtains the spatial positional relationship between the positions of information processing apparatuses used by the participants of a conference to allow a participant with whom data is exchanged to be readily identified (see Patent document 1) . According to the technology, speech (sound signal) of the same participant is recorded on more than one information processing apparatus and the phase difference between the sound signal of the speech recorded on a first information processing apparatus and the sound signal of the speech recorded on a second information processing apparatus is calculated to obtain the difference between the distance from that participant to the first information processing apparatus and distance from that participant to the second information processing apparatus. Then, the information about the distance difference thus calculated is exchanged between the information processing apparatuses and the spatial positional relationship between the information processing apparatuses is obtained by using the difference information.
[Patent Document 1] Published Unexamined Patent Application No. 8-70305

### [Summary of the invention]

In order to provide efficient communication using information processing apparatuses, a groupware is desirable that allows information processing apparatuses carried by users on a visit to a place to flexibly participate in a group consisting of nearby information processing apparatuses in that place. In order to implement such a groupware, the distance between those information processing apparatuses must be measured precisely.

For example, accuracy of several meters is sufficient for a meeting by one group consisting of all information processing apparatuses located in a meeting room. On the other hand, to form a group of participants belonging to a host company and a group of participants belonging to a caller company separately for a meeting at the host company, a measuring accuracy of about one meter may be required. When a group is formed by a cash register in a store and a mobile terminal of a customer for communication, accuracy of several tens centimeters may be required.

However, in the conventional technology, no method is disclosed for synchronizing the system times of these information processing apparatuses with a high accuracy. In order for the error in distance measured to fall within a one meter, the time difference between sound signals must be within approximately 3 ms because the speed of sound typically is approximately 340 m/second. However, typical methods such as thoseusingbuilt-inclocks of informationprocessing apparatuses cannot synchronize the system times of the information processing apparatuses with a high accuracy. Therefore it is difficult to obtain the distances with an accuracy that enables determination positional relationships in a meeting room.

An object of the present invention is to provide a distance measuring system, a distance measuring method, an information processing apparatus, and a program and recording medium that can solve the problem. The object is achieved by the combination of features set forth in the independent Claims. The dependent Claims define further advantageous specific embodiments.

### [Summary of the invention]

According to the first aspect of the present invention, there are provided a distance measuring system and a distance measuring method, an information processing apparatus, a program, and a recording method relating to the system. The measuring system which measures the distance between a first information processing apparatus and a second information processing apparatus, includes: a time synchronizing part for synchronizing the reference time of the first information processing apparatus with the reference time of the second information processing apparatus; a sound signal transmitting part for transmitting a sound signal from the first information processing apparatus to the second information processing apparatus in a sate where the reference time of the first informationprocessing apparatus and the reference time of the second information processing apparatus are synchronized with each other; and a distance calculating part for calculating the distance between the first information processing apparatus and the second information processing apparatus on the basis of a sound transmission timing determined based on the reference time of the first information processing apparatus and at which said sound signal has been transmitted and a sound reception timing at which the sound signal has been received and which is identified by the second information processing apparatus on the basis of the reference time.

According to a second aspect of the present invention, there are provided a distance measuring system and a distance measuring method, an information processing apparatus, a program, and a recording method relating to the system. The measuring system which includes a first and second information processing apparatuses and measures the distance between the first information processing apparatus and the second information processing apparatus, wherein, the first information processing apparatus includes: a sound signal transmitting part for transmitting a first sound signal to the second information processing apparatus; a sound signal receiving part for receiving a second sound signal to be transmitted after a predetermined delay time has elapsed since the reception of the first sound signal by the second information processing apparatus; a delay time storing part for storing the delay time; and a distance calculating part for calculating the distance between the first information processing apparatus and the second information processing apparatus on the basis of the sound transmission timing at which the first sound signal has been transmitted, the sound reception timing at which the second sound signal has been received, and the delay time; and the second information processing apparatus includes a sound signal receiving part for receiving the first sound signal; and a sound signal transmitting part for transmitting the second sound signal after the delay time has elapsed since the reception of the first sound signal.

The summary of the invention provided above does not enumerate all essential features of the present invention. Subcombinations of the features also can constitute the present invention.

With the present invention, the distance between multiple information processing apparatuses can be measured with a high degree of accuracy and information processing apparatus in the vicinity can be accurately identified.

While the present invention will be described below with respect to an embodiment of the present invention, the embodiment is not intended to limit the present invention which is defined in the Claims and not all of the combinations of features described in the embodiment are essential to the inventive solution.

### [Brief description of the invention]

Figure 1 shows a configuration of a distance measuring system 10 according to an embodiment of the present invention;
Figure 2 shows a configuration of an information processing apparatus 100 according to the embodiment of the present invention;
Figure 3 shows an operation flow in the information processing apparatus 100 according to the embodiment of the present invention;
Figure 4 shows an exemplary external view of the information processing apparatus 100 according to the embodiment of the present invention;
Figure 5 shows a configuration of a measurement directing part 207 according to the embodiment of the present invention;
Figure 6 shows a configuration of a distance measuring system 10 according to a first variation of the embodiment of the present invention;
Figure 7 shows a configuration of time synchronizing part 205 according to the first variation of the embodiment of the present invention;
Figure 8 shows an operation flow in the time synchronizing part 205 according to the first variation of the embodiment of the present invention;
Figure 9 shows a configuration of an information processing apparatus 100 according to a second variation of the embodiment of the present invention;
Figure 10 shows an operation flow in the information processing apparatus 100 according to the second variation of the embodiment of the present invention;
Figure 11 shows a configuration of an information processing apparatus 100 according to a third variation of the embodiment of the present invention;
Figure 12 shows an operation flow in the information processing apparatus 100 according to the third variation of the embodiment of the present invention;
Figure 13 shows a configuration of a time synchronizing part 205 according to a fourth variation of the embodiment of the present invention;
Figure 14 shows a configuration of an information processing apparatus 100 according to a fifth variation of the embodiment of the present invention;
Figure 15 shows an operation flow in the information processing apparatus 100 according to the fifth variation of the embodiment of the present invention;
Figure 16 shows a configuration of an information processing apparatus 100 according to a sixth variation of the embodiment of the present invention;
Figure 17 shows an operation flow in the information processing apparatus 100 according to the sixth variation of the embodiment of the present invention;
Figure 18 shows group placement views 1900 presented by the placement output part 2820 according to the sixth variation of the embodiment of the present invention; and
Figure 19 shows an exemplary hardware configuration of an information processing apparatus 100 according to the embodiment of the present invention.

### [Detailed description of the invention]

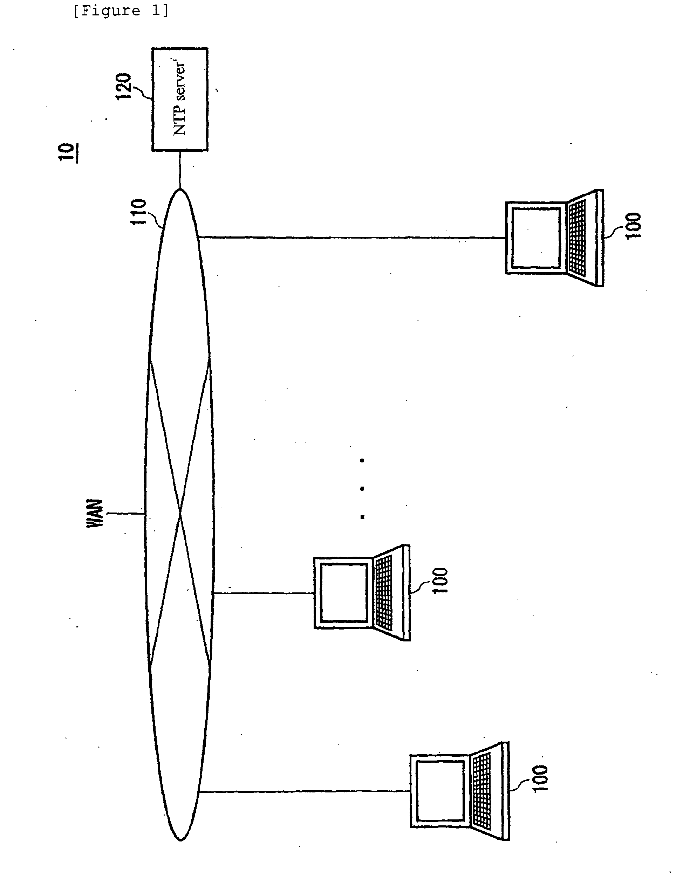

Figure 1 shows a configuration of a distance measuring system 10 according to the embodiment. The distance measuring system 10 includes multiple information processing apparatuses 100, an NTP server 120 which provides the reference time for the multiple information processing apparatuses 100, and a communication network 110 connecting the multiple information processing apparatuses 100 and the NTP server 120. The distance measuring system 10 has the capability to measure the distance between the multiple information processing apparatuses 100.

Each of the multiple information processing apparatuses 100 has the capability of requesting another information processing apparatus 100 to measure the distance between the requesting information processing apparatus and that other informationprocessing apparatus 100 and the capability of measuring the distance to another information processing apparatus 100 in response to a request from that other information processing apparatus 100. The NTP server 120 keeps the reference time to be set in the internal clocks in the information processing apparatuses 100. In order to allow the information processing apparatuses 100 to synchronize their internal clock to the reference time, the NTP server 120 is provided in the vicinity of them, for example in the broadcast domain of the information processing apparatuses 100. More preferably, it is provided in a room such as a meeting room in which the distance measuring system 10 is provided. Alternatively, the NTP server 120 may be connected to the information processing apparatuses 100 throughaWAN (WideAreaNetwork) wi thin therangeinwhich the internal clocks of the information processing apparatuses 100 can be adequately kept accurate. The communication network 110 is a LAN (Local Area Network), which may be a cable communication network such as an Ethernet^{®} or a wireless communication network such as an IEEE 802 .11a/b/g network, that provides connection among a number of information processing apparatuses 100 and the NTP server 120.

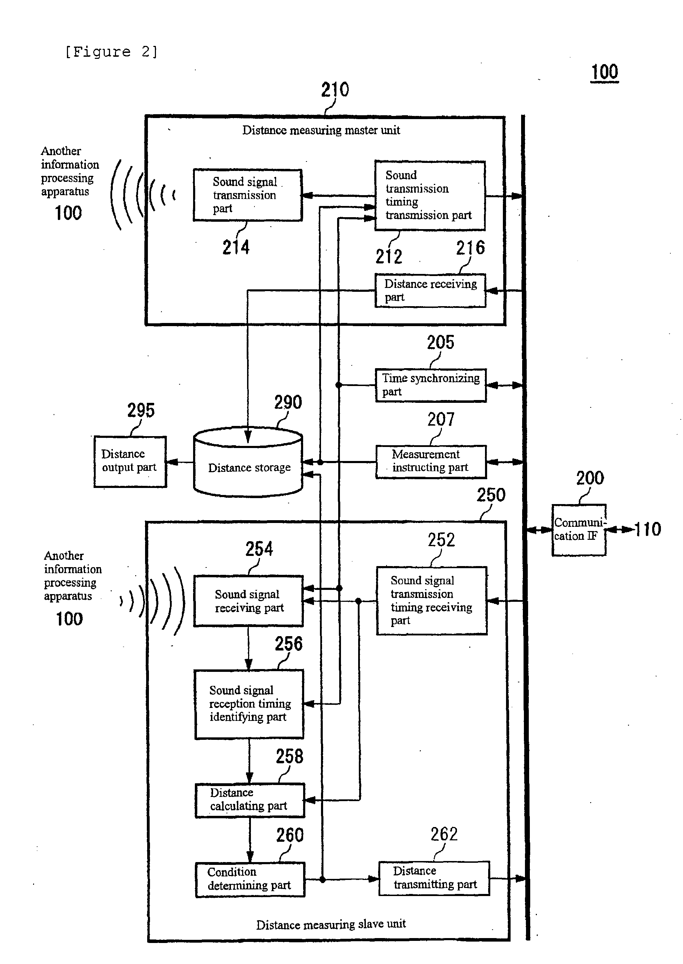

Figure 2 shows a configuration of an information processing apparatus 100 according to the present embodiment. Each of multiple information communication apparatuses 100, which may be a stationary or portable computer, PDA (Personal Data Assistants), or mobile phone, includes a communication IF (interface) 200, a time synchronizing part 205, a measurement directing part 207, a distance measuring master unit 210, a distance measuring slave unit 250, a distance storage 290, and a distance output part 295.

The communication IF 200 transmits and receives packets to and from another information processing apparatus 100 through the communication network 110. The time synchronizing part 205 synchronizes the reference time of the local information processing apparatus 100 with the reference time of the other information processing apparatuses 100, which is used for distance measurements. The measurement directing part 207 directs the distance measuring master unit 210 to measure distance.

The distance measuring master unit 210 measures the distance to another information processing apparatus 100 in response to a direction from the measurement directing part 207. The distance measuring master unit 210 has a sound transmission timing transmitting part 212, a sound signal transmitting part 214, and a distance receiving part 216. The sound transmission timing transmitting part 212 determines on the basis of the reference time of the local information processing apparatus 100 the timing for transmitting a sound signal to another information processing apparatus 100 and sends the sound signal transmission timing to that other informationprocessing apparatus 100 through the communication network 110. The sound signal transmitting part 214 transmits a sound signal from the local information processing apparatus 100 to another information processing apparatus 100 at the sound signal transmission timingwhile the reference time of the local information processing apparatus 100 is synchronized with the reference time of that other information processing apparatus 100. The distance receiving part 216 receives the distance between the local information processing apparatus 100 and another information processing apparatus 100, which is calculated on the basis of the sound transmission timing sent by the local information processing apparatus 100 to that other information processing apparatus 100 and the sound reception timing at which that other information processing apparatus 100 has received the sound signal, from that other information processing apparatus 100 through the communication network 110. The distance receiving part 216 associates the distance with that other information processing apparatus 100 and stores it in the distance storage 290.

The distance measuring slave unit 250 calculates the distance to another information processing apparatus 100 in response to a request from that other information processing apparatus 100 and returns the distance to that other information processing apparatus 100 through the communication network 110. The distance measuring slave unit 250 has a sound transmission timing receiving part 252, a sound signal receiving part 254, a sound reception timing identifying part 256, a distance calculating part 258, a condition determining part 260, and a distance transmitting part 262. The sound transmission timing receiving part 252 receives a sound transmission timing from the sound transmission timing transmitting part 212 in another information processing apparatus 100 through the communication network 110. The sound signal receiving part 254 receives a sound signal from the sound signal transmitting part 214 in another information processing apparatus 100. The sound reception timing identifying part 256 identifies the reception timing at which the sound signal receiving part 254 has received a sound signal, on the basis of the reference time of the local information processing apparatus 100 that is synchronized by the time synchronizing part 205 with the reference time of the NTP server 120. The distance calculating part 258 calculates the distance between the local information processing apparatus 100 and that other information processing apparatus 100 on the basis of the sound transmission timing received by the sound transmission timing receiving par 252 and the sound signal reception timing identified by the sound reception timing identifying part 256. The condition determining part 260 determines whether the calculated distance meets a predetermined condition. If it meets the predetermined condition, the condition determining part 260 associates the distance with that other information processing apparatus 100 and stores it in the distance storage 290 and also provides it to the distance transmitting part 262. The distance transmitting part 262 receives the distance from the condition determining part 260 and returns it to that other information processing apparatus 100 that has requested the measurement of the distance through the communication network 110.

The distance storage 290 stores the distance between the local information processing apparatus 100 and another information processing apparatus 100 calculated by that other information processing apparatus 100 in response to a request from the distance measuring master unit 210 and the distance between the local information processing apparatus 100 and another information processing apparatus 100 calculated by the local information processing apparatus 100 in response to a request from that other information processing apparatus 100, in association with that other information processing apparatus. The distance output part 295 provides the distance between the local information processing apparatus 100 and another information processing apparatus 100 stored in the distance storage 290 to the users of the local information processing apparatus 100.

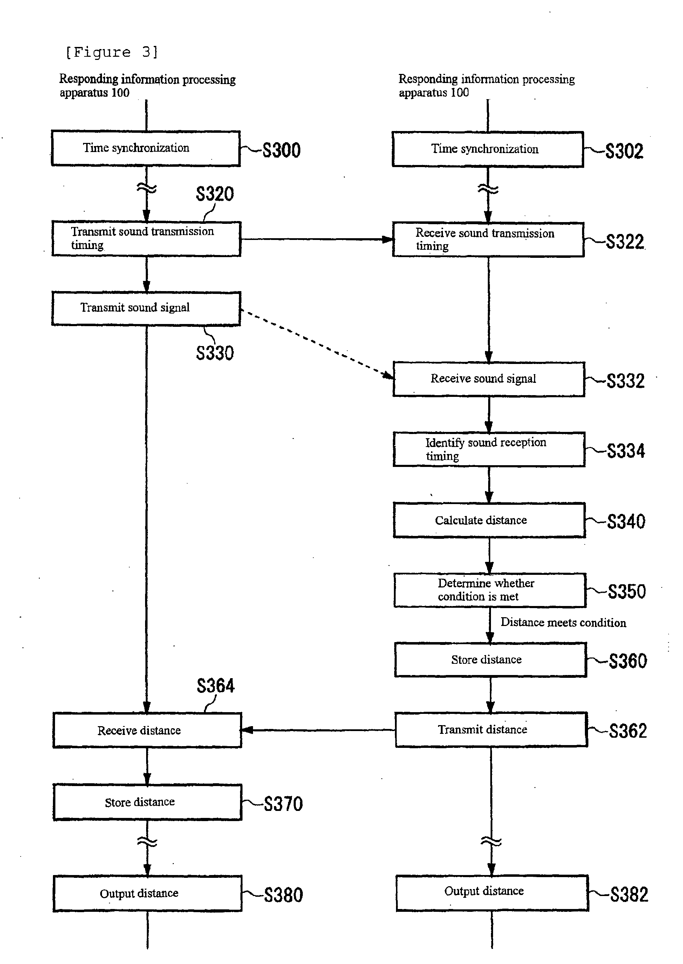

Figure 3 shows an operation flow in information processing apparatuses 100 according to the present embodiment.

First, the time synchronizing part 205 in a requesting information processing apparatus 100 communicates with the NTP server 120 through the communication IF 200 to synchronizes the internal clock of the information processing apparatus 100 to the time kept by the NTP server 120 and sets it as the reference time (S300). The time synchronizing part 205 of the responding information processing apparatus 100 communicates with the NTP server through the communication IF 200 to synchronize the internal clock of the responding information processing apparatus 100 to the time kept by the NTP server and sets it as the reference time of the responding information processing apparatus 100 (S302). In this way, the requesting information processing apparatus 100 and the responding information processing apparatus 100 can synchronize their internal clocks to the reference time of the NTP server 120, and thus the reference time of the requesting information processing apparatus 100 can be synchronized with the reference time of the responding information processing apparatus 100.

Then, the measurement directing part 207 in the requesting information processing apparatus 100 issues a direction to measure the distance between the requesting information processing apparatus 100 and the responding information processing apparatus 100. In response to this direction, the sound transmission timing transmitting part 212 transmits a sound transmission forenotice packet to the responding information processing apparatus 100 through the communication IF 200 (S320). Here, the sound transmission timing transmitting part 212 includes a sound transmission timing determined based on the reference time of the requesting information processing apparatus 100 in the sound transmission forenotice packet. The sound transmission timing may be a time to transmit a sound signal that is specified by using the internal clock synchronized with the reference time of the NTP server 120, for example. The sound transmission timing transmitting part 212 may also includes sound signal identification information in the sound transmission forenotice packet that identifies the sound signal transmitted by the requesting information processing apparatus 100.

Furthermore, the sound transmission timing transmitting part 212 may beforehand store sound transmission processing time elapses between the reception of a direction to transmit a sound signal and the transmission of the sound signal and correct the sound transmission timing to be included in the sound transmission forenotice packet on the basis of the sound transmission processing time.

Then, the sound transmission timing receiving part 252 in the responding information processing apparatus 100 receives the sound transmission forenotice packet from the requesting information processing apparatus 100 through the communication IF 200 (S322). The sound signal receiving part 254 receives the sound transmission timing included in the sound transmission forenotice packet from the sound transmission timing receiving part 252 and starts inputting sound a predetermined margin time ahead of the sound transmission timing.

Then, the sound signal transmitting part 214 in the requesting information processing apparatus 100 transmits a sound signal at the sound transmission timing determined based on the reference time of the requesting information processing apparatus 100 (S330) . Here, the requesting information processing apparatus 100 may FSK- or PSK-modulate data containing sound signal identification information identifying the sound signal to generate a sound signal so that the sound signal can be distinguished from other sound signals and transmit it. Furthermore, the requesting information processing apparatus 100 may include information such as the IP address or public key of the requesting information processing apparatus 100 and transmit it. The sound signal may be audible or inaudible sound. If it is audible sound, the sound signal may be music with data embedded in it.

Then the sound signal receivingpart 254 in the responding information processing apparatus 100 receives the sound signal transmitted by the requesting information processing apparatus 100 at the sound signal transmission timing (S332). The sound reception timing identifying part 256 in the responding information processing apparatus 100 then identifies the sound reception timing at which the sound signal receiving part 254 has received the sound signal, on the basis of the reference time of the responding information processing apparatus 100 (S334). The sound reception timing may be the time at which the sound signal has been received and identified by using the internal clock synchronized with the reference time of the NTT server 120, for example.

The sound reception timing identifying part 256 may previously store the sound reception processing time that elapses between the start of reception of a sound signal by the sounds signal receiving part 254 and the notification of the reception of the sound signal to the sound reception timing identifying part 256 and may correct the sound reception timing on the basis of the sound reception processing time.

Then, the distance calculatingpart 258 of the responding information processing apparatus 100 calculates the distance between the requesting information processing apparatus 100 and the responding information processing apparatus 100 on the basis of the sound transmission timing received from the requesting information processing apparatus 100 and the sound reception timing (S340). In particular, the distance calculating part 258 uses the sound transmission timing and the sound reception timing, that is, subtracts the sound transmission timing from the sound reception timing, for example, to obtain the sound propagation time required for the sound signal to reach the responding information processing apparatus 100 from the other information processing apparatus 100. The distance calculating part 258 then multiplies the sound propagation time by the speed of sound (for example 340 m/second) to obtain the distance.
Then, the condition determining part 260 of the responding information processing apparatus 100 determines whether the calculated distance meets a predetermined condition (S350). In particular, the condition determining part 260 determines whether the distance calculated by the distance calculating part 258 is less than or equal to a predetermined maximum distance. If the distance is less than or equal to the maximum distance, the condition determining part 260 provides the distance to the distance storage 290 and the distance transmitting part 262.

Alternatively, the condition determining part 260 may receives the sound propagation time from the distance calculating part 258 and determine whether the sound propagation time is less than or equal to a predetermined maximum transmission time and, if the sound propagation time is not greater than the maximum transmission time, the condition determining part 260 may provide the distance calculated by the distance calculating part 258 to the distance storage 290 and the distance transmitting part 262.

If the calculated distance or the sound propagation time meets the conditionmentionedabove, the distance storage 290 of the responding information processing apparatus 100 stores the distance calculated by the distance calculating part 258 in association with the requesting information processing apparatus 100 (S360). Thus, once the responding information processing apparatus 100 calculates the distance in response to a request from the requesting information processing apparatus 100, the responding information processing apparatus 100 can also update the distance in the responding apparatus 100. Therefore, when a new participant's information processing apparatus 100 is added to the distance measuring system 10, the distance between all participant information processing apparatuses 100 can be updated by only the new participant's information processing apparatus 100 transmitting a sound signal. Consequently, the annoyance that a large number of sound signals are exchanged every time a new information processing apparatus 100 is added can be reduced.
Then, if the calculated distance or the sound propagation time meets the condition, the distance transmitting part 262 of the responding information processing apparatus 100 transmits the distance calculated by the distance calculating part 258 to the requesting information processing apparatus 100 through the network 110 (S362) .

The distance output part 295 of the requesting information processing apparatus 100 and the responding information processing apparatus 100 provide the distance to information processing apparatuses 100 near the information processing apparatuses 100 to the users (S380 and S382). More specifically, for the information processing apparatuses 100 the distances to which are stored in the local information processing apparatus 100, the distance output part 295 displays their icons and/or names and the distances to them on a display of the local information processing apparatus 100 so that the user can operate on them. For example, the distance output part 295 may provide a number of ranges such as "2 m or more," "6 m or less, " and 6 m or more" so that the user can choose one to display from among options such as "close-by computers (within the range of 2 m or less)," "more-distant computers (within the range of 6 m or less), " and "computers in the entire room (in the whole range)".

The distance output part 295 may cluster the information processing apparatuses 100 in the distance measuring system 10 according to the distance between them, assign subnetworks to them, and connects the clusters to form a network, thereby dynamically creating a hierarchical network.

In the operation flow described above, the requesting information processing apparatus 100 determines the sound transmission timing on the basis of the reference time of the requesting information processing apparatus 100. The responding information processing apparatus 100 identifies the sound reception timing on the basis of the reference time of the responding information processing apparatus 100. According to the present embodiment, both of the requesting and responding information processing apparatuses 100 synchronize their internal clocks to the reference time of the NTP server 120, thus the error between the internal clocks of the requesting and responding information processing apparatuses 100 and therefore the error of the measured distance can be minimized.

Furthermore, calculated distances are stored in the distance storage 290atstepsS360, 362, S364, and S370 only if a responding information processing apparatus 100 is within a predetermined range. Therefore, distance information for a large number of information processing apparatuses 100 at great distance is not registered and accordingly presentation of an excessive amount of information to the user of the information processing apparatus 100 can be prevented.

In the operation flow described above, the requesting information processing apparatus 100 may include the sound transmission timing in the sound signal and transmit (S320 and S330) and the responding information processing apparatus 100 may receive the sound signal and extract the sound transmission timing from the sound signal (S322 and S332).

The requesting information processing apparatus 100 may request more than one responding information processing apparatus 100 to measure the distances. That is, the sound transmission timing transmitting part 212 of the requesting information processing apparatus 100 transmits a sound signal to multiple responding information processing apparatuses 100. Then, each of the multiple responding information processing apparatuses 100 performs the process described above to transmit the distance calculated by its distance measuring part 258 to the requesting information processing apparatus 100 through the communication network. Thus, the requesting informationprocessing apparatus 100 can obtain the distances between the nearby multiple information processing apparatuses 100 by transmitting a sound signal once and the number of transmissions of the sound signal can be reduced.

In the operation flow described above, the time synchronizing part 205 of the requesting information processing apparatus 100 may synchronize its time (S300) after a distance measurement request is issued, and transmit the sound transmission timing shown at S320. Similarly, the time synchronizing part 205 in responding information processing apparatus 100 may obtain the time kept by the NTP server 120 as shown at S302 after the sound transmission timing receiving part 252 receives a sound transmission timing (S322), in order to synchronize with the time kept in the responding information processing apparatus 100 to the obtained time (S320).

In this case, the requesting information processing apparatus 100 first transmits the sound transmission timing to the responding information processing apparatus 100, waits until the lapse of time required for the responding information processing apparatus 100 to complete time synchronization, and then transmits the sound signal. Thus, the sound signal receiving part 254 in the responding information processing apparatus 100 can synchronize the time kept by the responding information processing apparatus 100 before receiving the sound signal.

In the operation flow described above, the sound signal receiving part 254 in the responding information processing apparatus 100 may keep listening for a sound signal for a predetermined time period (for example five seconds) including the timing specified by the sound transmission timing received by the sound transmission timing receiving part 252 and, if it cannot not receive a sound signal during this period, it may discontinue the sound signal receiving operation. If the distance transmitting part 262 does not receive a sound signal during a predetermined period, it notifies the requesting information processing apparatus 100 that it has not received a sound signal. In response to this notification, the requesting information processing apparatus 100 can retry the process shown in Figure 3.

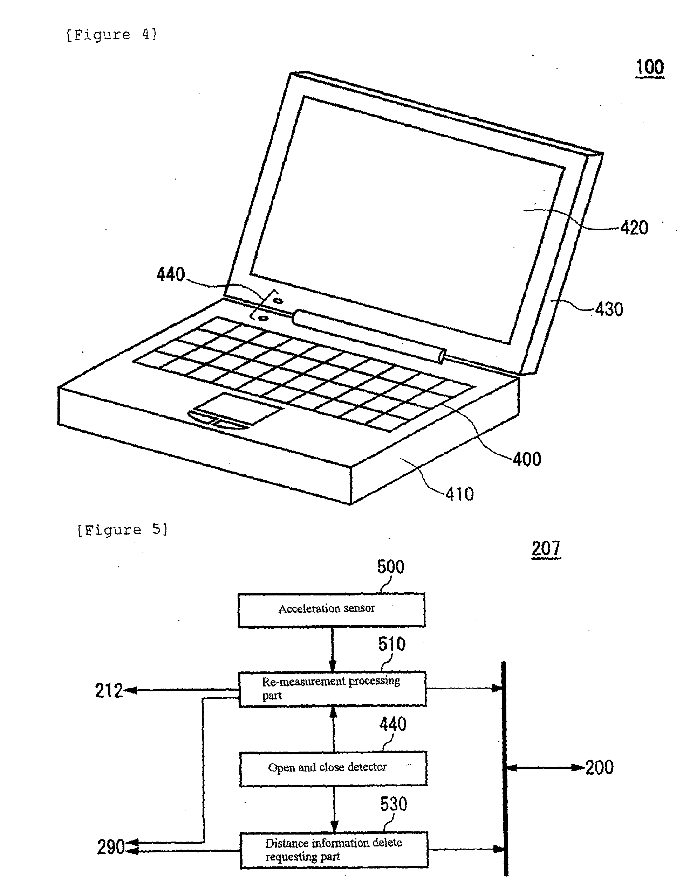

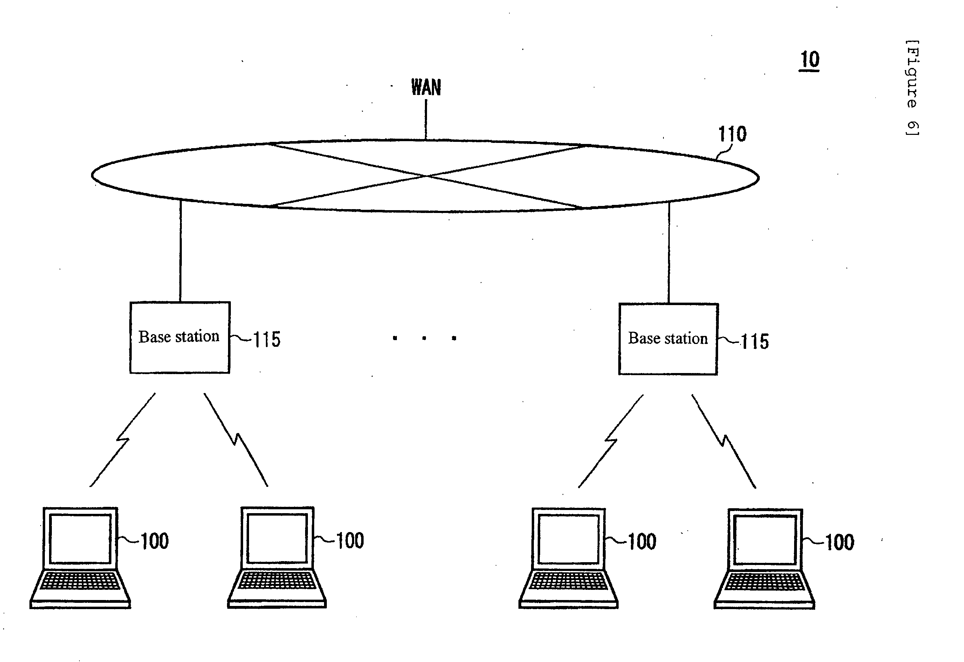

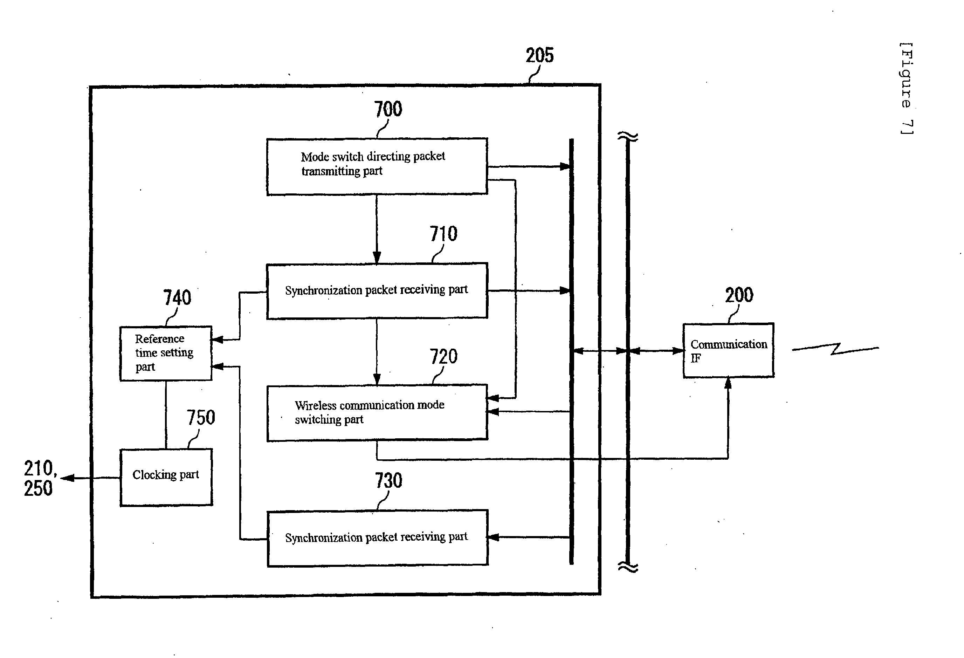

Placing the limitations on the period for receiving a sound signal, the responding information processing apparatus 100 can reduce power consumption compared with receiving a sound signal all the time. Figure 4 shows an external viewof an informationprocessing apparatus 100 according to the present invention. The information processing apparatus 100 has amainunit 410 includingakeyboard400 for receiving input from a user, a lidunit 430 including a display 420 for displaying information to a user, and an open and close detector 440.

The lid unit 430 is attached to the main unit 410 so that it can be opened and closed with respect to the main unit 410. When the lid unit 430 is in the close position with respect to the main unit 410, the keyboard 400 and the display 420 face each other so that the user cannot use the keyboard 400 and the display 420. On the other hand, when it is in the open position with respect to the main unit 410, the user can use the keyboard 400 and the display 420.

The open and close detector 440 includes a button, for example, that is depressed when the lid unit 439 is in the close position with respect to the main unit 410 to detect whether the lid unit 430 is in the close position with respect to the main unit 410.

Figure 5 shows a configuration of the measurement directing part 207 according to the present invention. The measurement directing part 207 includes an acceleration sensor 500, a re-measurement processing part 510, an open and close detector 440, and a distance information delete requesting part 530. The acceleration sensor 500 detects movement of the local information processing apparatus 100. When the acceleration sensor 500 detects movement of the local information processing apparatus 100, the re-measurement processing part 510 deletes the distance (s) associated with one or more of the other information processing apparatuses 100 and stored in the distance storage 290. When the local information processing apparatus 100 comes to rest, the re-measurement processing part 510 directs the sound transmission timing transmitting part 212 to measure the distance to the other information processing apparatuses 100. In this way, when movement of the local information processing apparatus 100 is detected, the re-measurement processing part 510 can cause the local information processing apparatus 100 to re-measure the distances to the other information processing apparatuses 100 and update the distance information stored in the distance storage 290 of the local information processing apparatus 100 and the other information processing apparatuses 100.

Alternatively, the re-measurement processing part 510 may request the other information processing apparatuses 100 to re-measure the distances through the communication IF 200 when the acceleration sensor 500 detects movement of the local information processing apparatus 100. In response to this request, the re-measurement processing part 510 of the measurement directing part 207 within each of the other information processing apparatuses 100 directs the sound transmission timing transmitting part 212 to measure the distance.

The re-measurement processing part 510 may directs the sound transmission timing transmitting part 212 to measure the distance to the other information processing apparatuses 100 when the lid unit 430 is in the open position with respect to the main unit 410. Thus, the re-measurement processing part 510 can measure the distances to the other information processing apparatuses 100 and allows the distance information to be used when the local information processing apparatus 100 becomes available to the user.

The distance information delete requesting part 530 request the other information processing apparatuses 100 through the communication IF to delete the information about the distances between those other information processing apparatus 100 and the local information processing apparatus 100 that is stored in them. In this way, when the local information processing apparatus 100 is placed in the non-use state, the distance information delete requesting part 530 can cause the information about the distances to the local information processing apparatus 100 that is stored in the other information processing apparatuses 100 to be deleted to prevent the information about the distance to the local information processing apparatus 100 from being used by the users of the other information processing apparatuses 100. Furthermore, the distance information delete directing part 530 may delete the information about the distances between the other information processing apparatuses 100 and the local information processing apparatus 100 when the lid unit 430 is in the closed position with respect to the main unit 410.

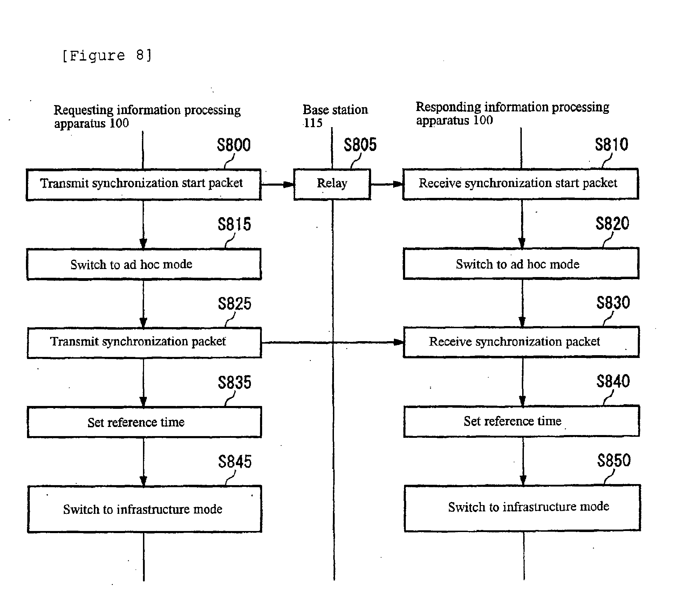

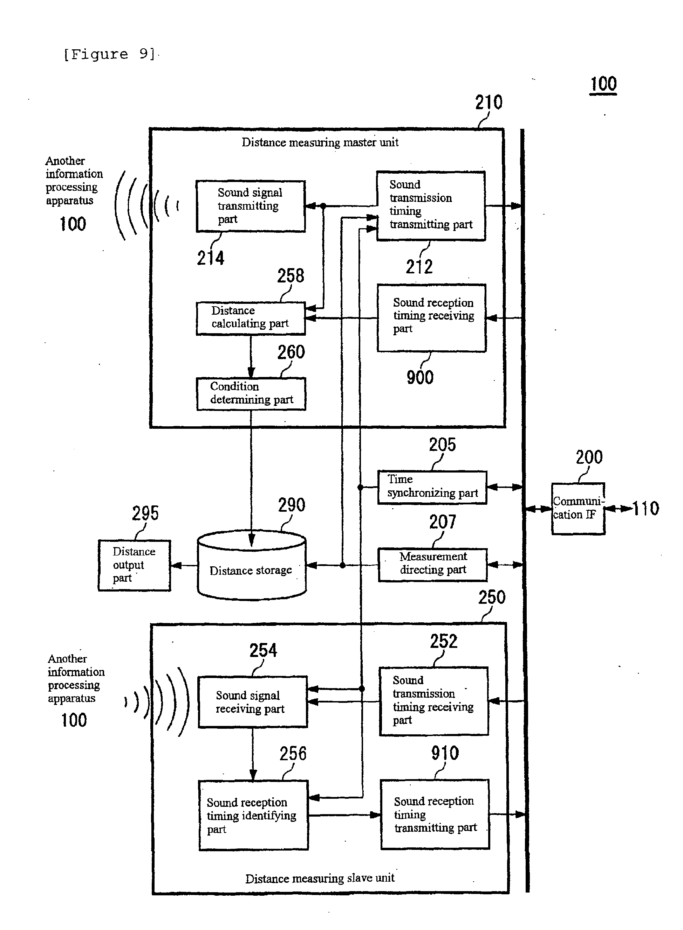

Figure 6 shows a configuration of the distance measuring system 10 according to a first variation of the present embodiment. Multiple information processing apparatuses 100 are connected to a wireless communication network 110 having base stations 115, which relay wireless communications. The wireless communication network according to this variation conforms to a standard such as IEEE 802.11a/b/g, for example. Each of the information processing apparatuses 100 according to the present variation has the same functionality and configuration as those of the information processing apparatuses 100 shown in Figures 2 to 5, except that the following points described with respect to Figures 7 and 8 and the communication IF 200 within it provides wireless communication.

Each information processing apparatus 100 in this variation can communicate with other information processing apparatuses 100 in either of first and second wireless communication mode. The first wireless communication mode is the infrastructure mode in IEEE 802.11, for example. In this mode, the information processing apparatus 100 transmits and receives wireless communication packets to and from the other information processing apparatuses 100 through the base stations 115. The second wireless communication mode is the ad hoc mode in IEEE 802.11, for example. In this mode, the information processing apparatus 100 directly transmits and receives wireless communication packets to and from the other information processing apparatuses 100 without intermediary of the base stations 115.

Figure 7 shows a configuration of a time synchronizing part 205 according to the first variation of the present embodiment. The time synchronizing part 205 according to this variation is characterized by directly transmits and receives a wireless synchronization communication packets to and from other information processing apparatuses 100 in the secondwireless communicationmode, instead of using the NTP server 120 shown in Figure 1 to synchronize the other information processing apparatuses 100.

The time synchronizing part 205 of this variation has a mode switch directing packet transmitting part 700, a wireless communication mode switching part 720, a synchronization packet transmitting part 710, a synchronization packet receiving part 730, a reference time setting part 740, and a clocking part 750. When starting a process for bringing the reference times of the other information processing apparatuses 1000 and the local information processing apparatus 100 into synchronization, the mode switch directing packet transmitting part 700 transmits a synchronization start packet for directing the start of the process to those other information processing apparatuses 100 through the base stations 115. The wireless communication mode switching part 720 switches between the first and second wireless communication modes of the local information processing apparatus 100. In particular, each information processing apparatus 100 uses the first wireless communication mode to perform normal data communication. When starting the process for synchronizing the reference times, the wireless communication mode switching parts 720 of the information processing apparatuses 100 that transmit a synchronization start packet and the information processing apparatuses 100 that receives the synchronization start packet switches the wireless communication mode of the information processing apparatuses 100 from the first to the second wireless communication mode.

The synchronization packet transmitting part 710 uses the second wireless communication mode to directly transmit a synchronization packet, which is a wireless communicate packet for synchronization, to the other information processing apparatuses 100. The synchronization packet receiving part 730 uses the second wireless communication mode to directly receive the synchronization packet sent from the other information processing apparatuses 100 without intermediary of the base stations 115. The reference time setting part 740 sets the reference time that is kept by the clocking part 750 of the local information processing apparatus 100, on the basis of the time at which it has transmitted a synchronization packet to another information processing apparatus 100 or the time at which it has received a synchronization packet from another information processing apparatus 100. The clocking part750includes an internal clock of the information processing apparatus 100 and clocks on the basis of the reference time set by the reference time setting part 740. The clocking part 750 provides the reference time it keeps to a distance measuring master unit 210 and a distance measuring slave unit 250.

Figure 8 shows an operation flow in the time synchronizing part 205 according to the first variation of the present embodiment. It is assumed here that before a process for synchronizing between the reference times of a requesting information processing apparatus 100 that requests synchronization and a responding information processing apparatus 100 that responds to the synchronization request, the requesting information processing apparatus 100 and the responding information processing apparatus 100 are wirelessly communicating with each other in the first wireless communication mode.

First, in order to start the process for synchronizing the reference times between the requesting information processing apparatus 100 and the responding information processing apparatus 100, the mode switching directing packet transmitting part 700 of the requesting information processing apparatus 100 transmits a synchronization start packet to the responding information processing apparatus 100 through the communication IF 200 in the first wireless communication mode (5800) . Then, the wireless communication mode switching part 720 of the requesting information processing apparatus 100 switches the wireless communication mode of the requesting information processing apparatus 100 from the first wireless communication mode (for example, the infrastructure mode) in which a wireless communication packet is transmitted to a responding information processing apparatus 100 through a base station 115 to the second wireless mode (for example, the ad hoc mode) in which a wireless communication packet is directly transmitted to the responding information processing apparatus 100 without intermediary of a base station 115 (S815).

The base station 115 relays the synchronization start packet transmitted from the requesting information processing apparatus 100 (S805) . The wireless communication mode switching part 720 of the responding information processing apparatus 100 receives the synchronization start packet relayed by the base station 115 through the communication IF 200 (S810). Then the wireless communication mode switching part 720 switches the wireless communication mode of the responding information processing apparatus 100 from the first wireless communication mode in which a wireless communication packet transmitted from the requesting information processing apparatus 100 is received through the base station 115 to the second wireless communication mode in which it is received directly from the requesting information processing apparatus 100 without intermediary of the base station 115 (S820).

Then, the synchronization packet transmitting part 710 of the requesting information processing apparatus 100 directly transmits a synchronization packet, which is a wireless communication packet for synchronization, to the responding information processing apparatus 100 in the second wireless communication mode without intermediary of the base station 115 (S825). The synchronization packet receiving part 730 of the responding information processing apparatus 100 uses the secondwireless communicationmode to directly receive the synchronization packet transmitted from the requesting information processing apparatus 100 without intermediary of the base station 115 (S830).

Then, the reference time setting part 740 of the requesting information processing apparatus 100 sets the reference time of the requesting information processing apparatus 100 in the clocking part 750 with reference to the time at which the synchronization packet transmitting part 710 has transmitted the synchronization packet (S835). The reference time setting part 740 of the responding information processing apparatus 100 sets the reference time of the responding information processing apparatus 100 in the clocking part 750 with reference to the time at which the wireless communication mode switching part 720 has received the synchronization packet (S840). Here, the clocking parts 750 of the requesting and responding information processing apparatuses 100 may store the time at which the synchronization packet has been transmitted and the time at which the synchronization packet has been received as the reference times and provide the time elapsed from the reference time to the distance measuring master unit 210 and the distance measuring slave unit 250. Alternatively, the time at which the synchronization packet transmitting part 710 of the requesting information processing apparatus 100 transmits the synchronization packet may be included in the synchronization packet and the reference time setting part 740 of he responding information processing apparatus 100 may set that time or that time plus a delay time in transmission and reception of the synchronization packet in the internal clock of the clocking part 750.

Once the reference times has been synchronized, the wireless communication mode switchingparts 720 of the requesting information processing apparatus 100 and the responding information processing apparatus 100 switches the wireless communication mode from the second wireless communication mode to the first wireless communication mode (for example the infrastructure mode) (S845 and S850). The wireless communication mode switching part 720 of the requesting information processing apparatus 100 may switch the wireless communication mode of the information processing apparatus 100 to the first wireless communication mode when a predetermined timeout occurs after the reception of the synchronization start packet or synchronization packet. Similarly, the wireless communication mode switching part 720 of the responding information processing apparatus 100 may switch the wireless communication mode of the responding information processing apparatus 100 to the first wireless communication mode if it does not receive a synchronization packet during a predetermined timeout period since the reception of a synchronization start packet. Thus the wireless communication mode switching parts 720 can switch the requesting and responding information processing apparatuses 100 back to the first wireless communication mode to allownormal data communication to be continued in the event that a failure occurs during transmission of a wireless communication packet and the reference time synchronization fails.

As a result of the process described above, the reference times of the requesting and responding information processing apparatuses 100 are brought into synchronization. A sound transmission timing transmitting part 212 transmits a sound transmission timing determined based on the reference time that is set on the basis of the time at which the synchronization packet has been transmitted, to the responding information processing apparatus 100 (S320 in Figure 3) . The sound transmission timing receiving part 252 of the responding information processing apparatus 100 receives the sound transmission timing (S322 in Figure 3). Then the requesting and responding information processing apparatuses 100 measure the distance in the same way as in the process shown in Figure 3.

The time synchronizing part 205 described above can synchronize the time at which the requesting information processing apparatus 100 has transmit a synchronization packet with the time at which the responding information processing apparatus has received the synchronization, thereby synchronizing the reference times of the requesting and responding information processing apparatuses 100. The requesting and responding information processing apparatuses 100 uses the second wireless communication mode to directly receive the synchronization packet without intermediary of a base station 115. Accordingly, the responding information processing apparatus 100 receives the synchronization packet at nearly the same time the requesting information processing apparatus 100 has transmitted it. Therefore, the requesting information processing apparatus 100 and the responding information processing apparatus 100 can accurately synchronize the reference time.

Figure 9 shows a configuration of an information processing apparatus 100 according to a second variation of the present embodiment. In this variation, a requesting information processing apparatus 100, instead of a responding information processing apparatus 100, calculates the distance. In Figure 9, the components labeled with the same reference numerals as those of components in Figure 2 have the same functions and configuration as those components described with respect to Figure 2, except for those described below.

A distance measuring master unit 210 according to this variation has a sound transmission timing transmitting part 212, a sound signal transmitting part 214, a sound reception timing receiving part 900, a distance calculating part 258, and condition determining part 260. The sound transmission timing transmitting part 212 and the sound signal transmitting part 214 have the same functionality and configuration as those of the sound transmission timing transmitting part 212 and the sound signal transmitting part 214 shown in Figure 2. The sound reception timing receiving part 900 receives a sound reception timing at which another information processing apparatus 100 has received a sound signal transmitted by the sound signal transmitting part 214, from that other information processing apparatus 100 through a communication network 110. The distance calculating part 258 calculates the distance between the local information processing apparatus 100 and the other information processing apparatus 100 from the sound transmission timing at which the sound signal transmitting part 214 has transmitted a sound signal and the sound reception timing received from that other information processing apparatus 100. The method for calculating the distance from the sound transmission timing and the sound reception timing is the same as that in the distance calculating part 258 shown in Figure 2.

The condition determining part 260 determines whether the distance or sound propagation time between the local information processing apparatus 100 and another information processing apparatus 100 meets a predetermined condition in a manner similar to that in the condition determining part 260 shown in Figure 2. If the condition determining part 260 determines that the condition is met, it associates the distance with that other information processing apparatus 100 and stores it in the condition determining part 260.

A distance measuring slave unit 250 according to this variation has a sound transmission timing receiving part 252, a sound signal receiving part 254, a sound reception timing identifying part 256, and a sound reception timing transmitting part 910. The sound transmission timing receiving part 252, the sound signal receiving part 254, and the sound reception timing identifying part 236 has the same functionality and configuration as those of the components labeled with the same reference numerals in Figure 2. The sound reception timing transmitting part 910 transmits a sound reception timing at which a sound signal has been received, which is identified by the sound reception timing identifying part 256 of the information processing apparatus 100 on the basis of the reference time of the information processing apparatus 100, to another information processing apparatus 100 that has transmitted the sound signal through a communication network 110.

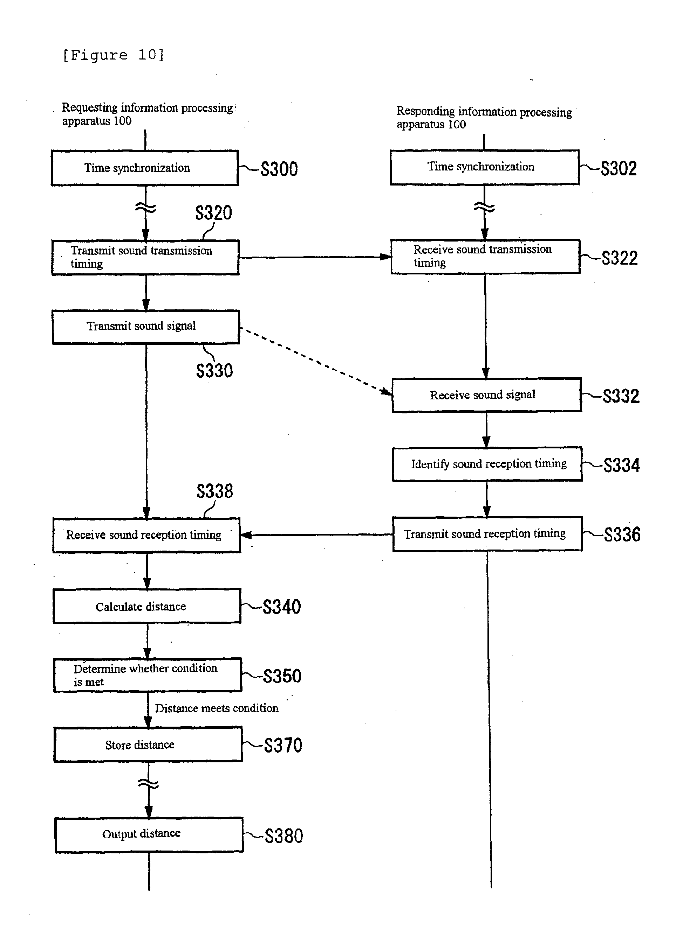

Figure 10 shows an operation flow in information processing apparatuses 100 according to the second variation of the present embodiment.

Requesting and responding information processing apparatuses 100 perform steps S300, S302, S320, S322, S330, S332, andS334 inamanner similar to that in the steps with the same reference numerals in Figure 3. Then, the sound reception timing transmitting part 910 of the responding information processing apparatus 100 wirelessly transmits the sound reception timing identified by the sound reception timing identifying part 256 on the basis of the reference time to the requesting information processing apparatus 100 (S1000).

Then, the sound reception timing receiving part 900 of the requesting information processing apparatus 100 wirelessly receive the sound reception timing from the responding information processing apparatus 100 (S1010). The requesting information processing apparatus 1100 performs steps S340 and S350 in a similar manner to that in steps S340 and S350 performed by the responding information processing apparatus 100 shown in Figure 3. If the distance or sound propagation time between the requesting information processing apparatus 100 and the responding information processing apparatus 100 meets a predetermined condition (S350), the distance is stored (S370) and output (S380) in the same way as in steps S370 and S380 in Figure 3.

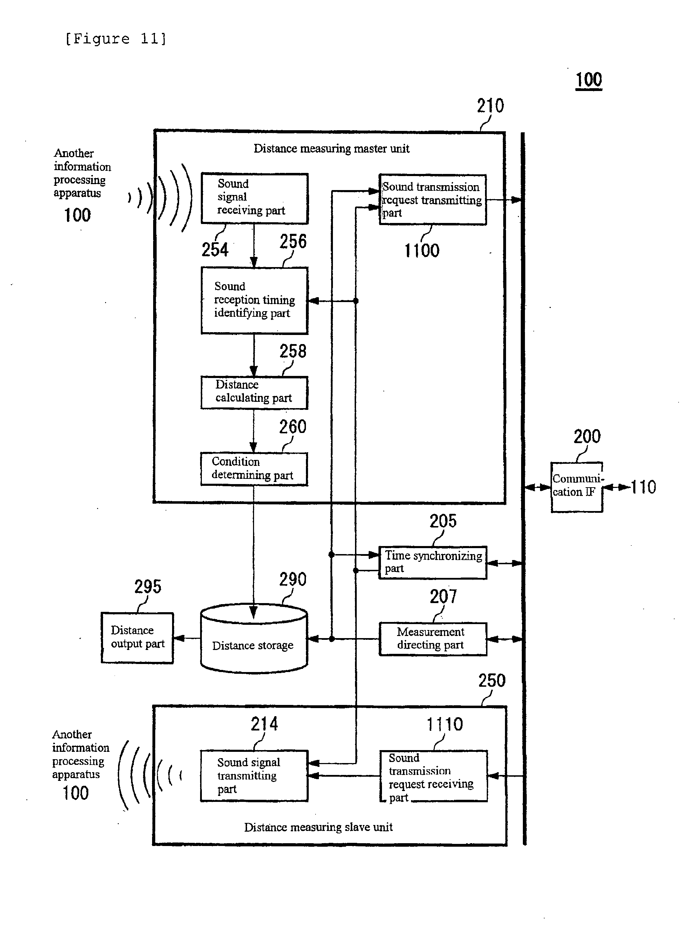

Figure 11 shows a configuration of an information processing apparatus 100 according to a third variation of the present embodiment. In this variation, a responding information processing apparatus 100 transmits a sound signal at a sound transmission timing received from a requesting information processing apparatus 100. The requesting information processing apparatus 100 receives the sound signal and calculate the distance. In Figure 11, the components labeled with the same reference numerals as in Figure 9 have the functions and configuration described with respect to Figure 9, except for those described below.

A distance measuring master unit 210 according to this variation has a sound transmission request transmitting part 1100, a sound signal receiving part 254, a sound reception timing identifying part 256, a distance calculating part 258, and a condition determining part 260. The sound transmission request transmitting part 1100 is provided in place of the sound transmission timing transmitting part 212 shown in Figure 9 and transmits a sound transmission request for requesting the transmission of a sound signal at a sound transmission timing determined based on the reference time of the information processing apparatus 100 to another information processing apparatus 100 through a communication IF 200. The sound signal receiving part 254 has the functionality and configuration similar to those of the sound signal receiving part 254 shown in Figure 9 and receives a sound signal transmitted by that other information processing apparatus 100 at the sound transmission timing. The sound reception timing identifying part 256 has the same functionality and configuration as that of the sound reception timing identifying part 256 shown in Figure 9 and identifies the sound reception timing at which the sound signal receiving part 254 has received a sound signal based on the reference time of the information processing apparatus 100. The distance calculating part 258 and the condition determining part 260 has the same functionality and configuration as the distance calculating part 258 and the condition determining part 260 shown in Figure 9.

A distance measuring slave unit 250 according to this variation has a sound transmission request receiving part 1110 and a sound signal transmitting part 214. The sound transmission request receiving part 1110, which is provided inplace of the sound transmission timing receiving part 254, receives a sound transmission request from another information processing apparatus 100. The sound signal transmitting part 214 transmits a soundsignal at a sound transmission timing specified by a sound transmission request on the basis of the reference time of the information processing apparatus 100.

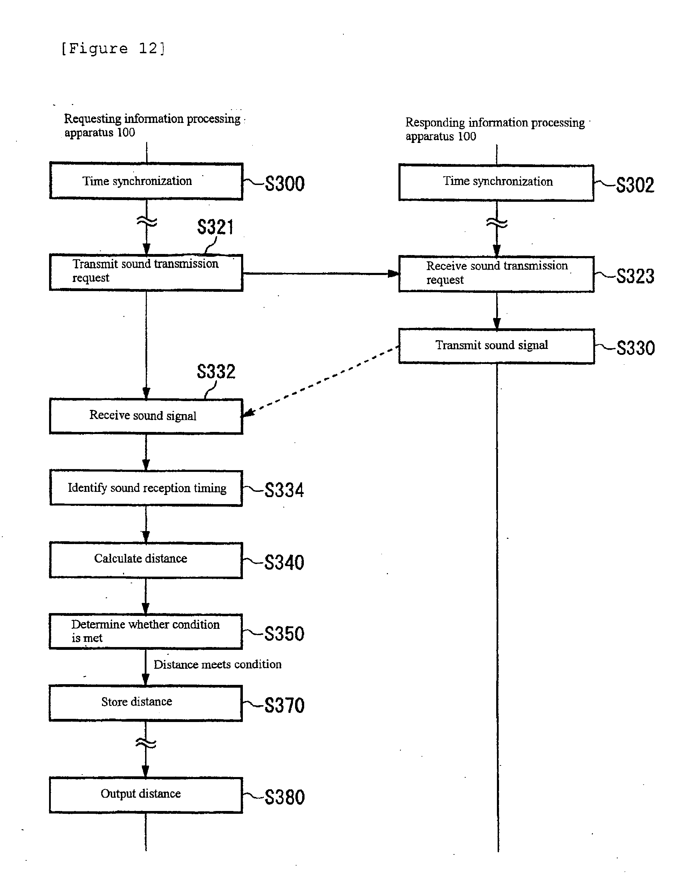

Figure 12 shows an operation flow in information processing apparatuses 100 according to the third variation of the present embodiment.

A requesting information processing apparatus 100 and a responding information processing apparatus 100 perform steps S300 and S302 in the same way as in the steps with the same reference numbers in Figure 10. Then, the sound transmission requesting part 1100 of the requesting information processing apparatus 100 transmits a sound transmission request to the responding information processing apparatus 100 (S321). The responding information processing apparatus 100 receives the sound transmission request through its sound transmission request receiving part 1110 (S323) and transmits a sound signal at a sound transmission timing specified by the sound transmission request through its sound signal transmitting part 214 (S330).

Then, the sound signal receiving part 254 of the requesting information processing apparatus 100 receives the sound signal transmitted from the responding information processing apparatus 100 (S332). Then the sound receiving timing identifying part 256 of the requesting information processing apparatus 100 identifies the sound signal reception timing in the same way as in S334 in Figure 10 (S334). The requesting information apparatus 100 then performs steps S340, S350, S370, and S380 in the same way as in the steps with the same reference numbers in Figure 10.

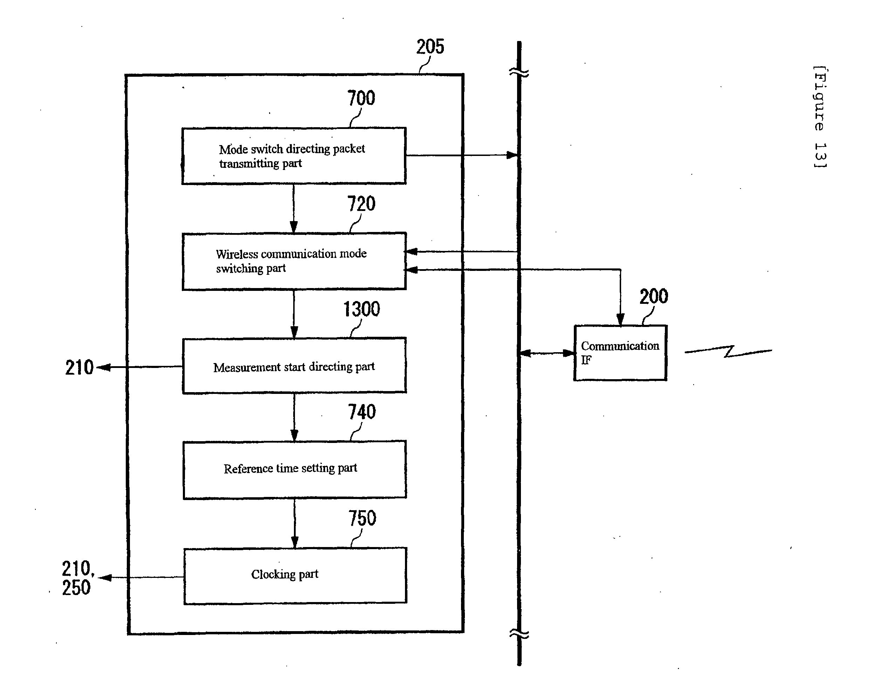

Figure 13 shows a configuration of a time synchronizing part 205 according to a fourth variation of the present embodiment. An information processing apparatus 100 of this variation has the time synchronizing part 205 shown in Figure 13 in place of the time synchronizing part 205 of the information processing apparatus 100 shown in Figure 11.

The time synchronization part 205 according to this variation includes a mode switch direction packet transmitting part 700, a wireless communication mode switching part 720, a measurement start directing part 1300, a reference time settingpart 740, anda clocking part 750. In Figure 13, the components labeled with the same reference numerals as those in Figure 7 have the same functions and configuration described with respect to Figure 7, except for those described below.

The mode switch directing packet transmitting part 700 transmits to another information processing apparatus 100 through a communication network 110 amode switch directing packet that directs switching the wireless communication mode of that other information processing apparatus from a first wireless communication mode to a secondwireless communicationmode, inplace of the synchronization start packet that the mode switch directing packet transmitting part 700 shown in Figure 7 transmits. With this, the mode switch directing packet transmitting part 700 directs switching of the wireless communication mode of that other information processing apparatus 100 to the second wireless communication mode. The wireless communication mode switching part 720 switches the wireless communication mode of the information processing apparatus 100 from the first wireless communication mode to the second wireless communication mode when the mode switch direction packet transmitting part 700 has transmitted a mode switch directing packet to another information processing apparatus 100. The wireless communication switching part 720 of that other information processing apparatus 100 switches the wireless communication mode of that other information processing apparatus 100 from the first wireless communication mode to the second wireless communication mode when a mode switch directing packet has been received from the information processing apparatus 100.

Once the mode switch directing packet transmitting part 700 has transmitted the mode switch directing packet and the wireless communication mode switching part 720 has switched the wireless communication mode of the information processing apparatus 100 to the second wireless communication mode, the measurement start directing part 1300 directs the sound transmission request transmitting part 1100 in the distance measuring master 210 to start distance measurement, in the second wireless communication mode of the information processing apparatus 100. In this way, the measurement start directing part 1300 causes the sound transmission request transmitting part 1100 to transmit a sound transmission request in the second wireless communication mode. As a result, the measurement start directing part 1300 can cause the other information processing apparatus 100 to set the reference time of the other information processing apparatus 100 on the basis of the time at which it has received the sound transmission request. In particular, the sound transmission request receiving part 1110 and the sound signal transmitting part 214 of the other information processing apparatus 100 that has received the sound transmission request transmits a sound signal after a predetermined delay time has elapsed since the base point in time at which it has received the sound transmission request. The measurement start directing part 1300 determines, on the basis of the timing at which the sound transmission request transmitting part 1100 has transmitted the sound transmission request, the sound transmission timing at which the responding information processing 100 transmits the sound signal and causes the reference time setting part 740 to set the reference time based on that sound transmission timing. The reference time setting part 740 and the clocking part 750 has the same functionality and configuration as those of the reference time setting part 740 and the clocking part 750 shown in Figure 7.

The time synchronizing part 205 described above can transmit in the second wireless communication mode the sound transmission request directly to the responding information processing apparatus 100 without intermediary of a base station 115 . Therefore, the distance calculating part 258 of the requesting information processing apparatus 100 can calculate the distance between the requesting information processing apparatus 100 and the responding information processing apparatus 100 with an adequate accuracy on the basis of the timing of transmitting the sound transmission by the requesting information processing apparatus 100, the timing at which the sound signal receiving part 254 has received the sound signal, and the delay time preset in the responding information processing apparatus 100.

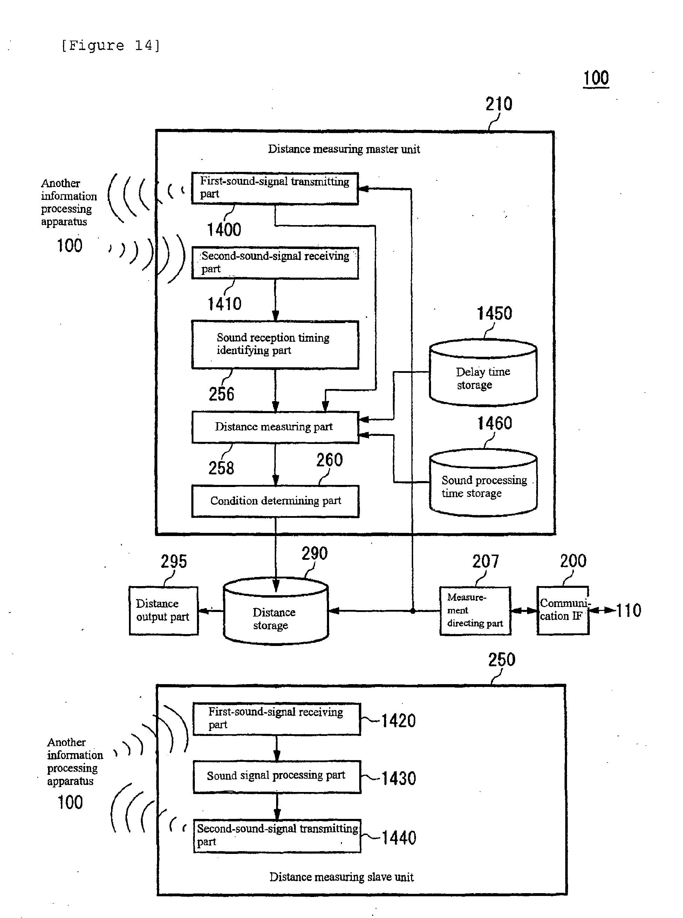

Figure 14 shows a configuration of an information processing apparatus according to a fifth variation of the present embodiment. In this variation, a requesting information processing apparatus 100 transmits a fist sound signal to a responding information processing apparatus 100. The responding information processing apparatus 100 transmits a second sound signal a predetermined time after it receives the first sound signal. Then, the requesting information processing apparatus 100 receives thesecondsound signal and calculates the distance between the requesting information processing apparatus 100 and the responding information processing apparatus 100 on the basis of the time elapsedbetween the transmission of the first sound signal and the transmission of the second sound signal. In Figure 14, the components labeled with the same reference numerals as those in Figure 11 have the same functions and configurations described with Figure 11, except for those described below.

A distance measuring master unit 210 according to this variation includes a first-sound-signal transmitting part 1400, a second-sound-signal receiving part 1410, a sound reception timing identifying part 256, a delay time storage 1450, a sound processing time storage 1460, a distance calculating part 258, and a condition determining part 260. The first-sound-signal transmitting part 1400 transmits a first sound signal to another informationprocessing apparatus 100 in response to a direction to start measurement from a measurement directing part 207. The second-sound-signal receiving part 1410 receives a second sound signal, which is transmitted from that other information processing apparatus 100 a predetermined delay time after that other information processing apparatus 100 has received the first sound signal. The sound reception timing identifying part 256, which has the same functionality and configuration as that of the sound reception timing identifying part 256 shown in Figure 11, identifies the sound reception timing at which the second-sound-signal receiving part 1410 has received the second sound signal.

The delay time storage 1450 stores a delay time between the reception of the first sound signal by another information processing apparatus 100 and the transmission of the second sound signal by that information processing apparatus 100. The delay time is preset to a value greater than the time required for a responding information processing apparatus 100 to transmit the second sound signal after receiving the first sound signal. The sound processing time storage 1460 stores the sound transmission processing time elapsed from when the sound signal transmitting part 1400 was directed to transmit the first sound signal until the transmission of the first sound signal and the sound reception processing time elapsed from when the second-sound-signal receiving part 1410 received the second sound signal until the second-sound-signal receiving part 1410 notifies the reception of the second sound signal.

The distance calculating part 258 calculate the distance between the local information processing apparatus 100 and another information processing apparatus 100 on the basis of the sound transmission timing at which the first sound signal has been transmitted, the sound reception timing at which the second sound signal has been received, and the delay time stored in the delay time storage 1450. The distance calculating part 258 according to this variation adds the sound transmission processing time to the timing at which the first-sound-signal transmitting part 1400 is directed to transmit the fist sound signal to obtain a precise sound transmission timing and subtracts the sound reception processing time from the time at which the second-sound-signal receiving part 1410 has notifies the reception of the second sound signal to obtain a precise sound reception timing. The condition determining part 260 has the same functionality and configuration as those of the condition determining part 260 shown in Figure 11.

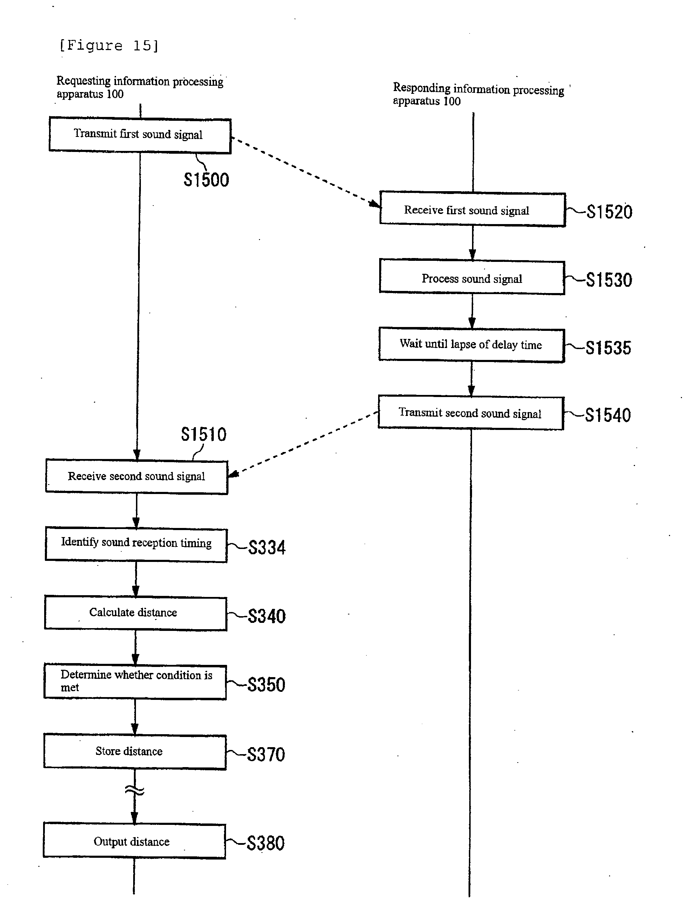

The distance measuring slave unit 250 according to this variation includes a first-sound-signal receiving part 1420, a sound signal processing part 1430, and a second-sound-signal transmitting part 1440. The first-sound-signal receiving part 1420 receives a first sound signal transmitted from another information processing apparatus 100. The sound signal processing part 1430 converts the first sound signal data into a second sound signal. The second-sound-signal transmitting part 1440 transmits the second sound signal after the a delay time preset in the delay time storage 1450 has elapsed since the reception of the first sound signal. Figure 15 shows an operation flow in information processing apparatuses 100 according to the fifth variation of the present embodiment.

First, the first-sound-signal transmitting part 1400 of a requesting information processing apparatus 100 transmits a first sound signal to a receiving information processing apparatus 100 (S1500). The first sound-signal transmitting part 1400 according to this variation modulates data including sound signal identification information for identifying the first sound signal to sound, which is the first sound signal. The first-sound-signal transmitting part 1400 may also include device identification information such as an IP address identifying the requesting information processing apparatus 100 in the first sound signal and may further include delay time specification information that specifies the delay time between the reception of the first sound signal and the transmission of the second sound signal in the first sound signal.

Then, the first-sound-signal receiving part 1420 of the responding information processing apparatus 100 receives the first sound signal transmitted from the requesting information processing apparatus 100 (S1520).

Then, the sound signal processing part 1430 of the responding information processing apparatus 100 performs sound signal processing to convert the first sound signal into the second sound signal (S1530). In particular, the sound signal processing part 1430 of the responding information processing apparatus 100 first demodulates the first sound signal to obtain the data transmitted. The sound signal processing part 1430 then extracts the sound signal identification information that identifies the first sound signal from the data obtained from the first sound signal. In an implementation in which the data includes device identification information and/or delay time specification information, the sound signal processing part 1430 also extracts these items of information. Then, the sound signal processing part 1430 generates reply data including information identifying the first sound signal and information identifying the responding information processing apparatus 100. The sound signal processing part 1430 then modulates the replay data into the second sound signal.

Then, the second-sound-signal transmitting part 1440 of the responding information processing apparatus 100 waits until the predetermined delay time elapses from the reception of the first sound signal (S1535) and then transmits the second sound signal (S1540). The second-sound-signal transmitting part 1440 may transmit the second sound signal after the lapse of the same delay time that is stored in the delay time storage 1450. Alternatively, the second-sound-signal transmitting part 1440 may transmit the second sound signal after the lapse of a delay time specified by delay time specification information extracted from the first sound signal.

Then, the second sound signal receiving part 1410 of the requesting information processing apparatus 100 receives the second sound signal (S1510) and determines the sound signal reception timing at which it received the second sound signal (S334). The distance calculating part 258 then subtracts the delay time stored in the delay time storage 1450 from the time difference between the sound transmission timing and the sound reception timing that are corrected by using the sound transmission processing time and the sound reception processing time stored in the sound processing time storage 1460 to obtain the round-trip soundpropagation time between the requestinginformation processing apparatus 100 and the responding information processing apparatus 100. Then, the distance calculating part 258 multiplies the sound propagation time by the speed of sound and divides the result by 2 to obtain the distance between the requesting information processing apparatus 100 and the responding information processing apparatus 100.

Then, the requesting information processing apparatus 100 performs steps S350, S380, and S380 in the same way as in the steps labeled with the same reference numerals in Figure 12.

According to the variation described above, the distance between the requesting information processing apparatus 100 and the responding information processing apparatus 100 can be accurately calculated even if there is no NTP server 120 in the vicinity and at least one of the requesting information processing apparatus 100 and the responding information processing apparatus 100 has no wireless communication interface.

In this variation, the first-sound-signal transmitting part 1400 may transmit the first sound signal in at least one of multiple time slots presets in both the requesting and responding information processing apparatuses 100 in response to a request for measuring the distance from the measurement directing part 207. Then, the first-sound-signal receiving part 1420 of the responding information processing apparatus 100 may detect in each of the preset multiple time slots whether it has received the first sound signal and omit receiving or detecting the reception of the first sound signal in the remaining time slots.

For example, the requesting information processing apparatus 100 transmits the first sound signal in predetermined time slots such as between 0 and 5 seconds past every minute and between 30 and 35 seconds past every minute. The responding information processing apparatus 100 detects whether it has received the first sound signal, only the time slots between 0 and 5 seconds past every minute and between 30 and 35 seconds past every minute. This can reduce the workload and power consumption in the responding information processing apparatus 100 compared with the case where the responding information processing apparatus 100 determines constantly whether it has received the first sound signal.

This function can be used in an implementation of information processing apparatuses 100 shown in Figure 2 in which the requesting informationprocessing apparatus 100 transmits a soundsignal without transmitting a sound transmission forenotice packet to the responding information processing apparatus 100.

Furthermore, the responding information processing apparatus 100 described above may determine the delay time. For example, the sound signal processing part 1430 generates the second sound signal that includes data about a delay time determined by the responding information processing apparatus 100 at S1530 in the operation flow described above. Then, the second-sound-signal transmitting part 1440 transmits the second sound signal after the lapse of the delay time determined by the responding information processing apparatus 100.

Furthermore, if more than one responding information processing apparatus 100 transmits the second sound signal in response to the firstsoundsignaltransmittedby a requestinginformation processing apparatus 100, different delay times may be set for the responding information processing apparatuses 100.

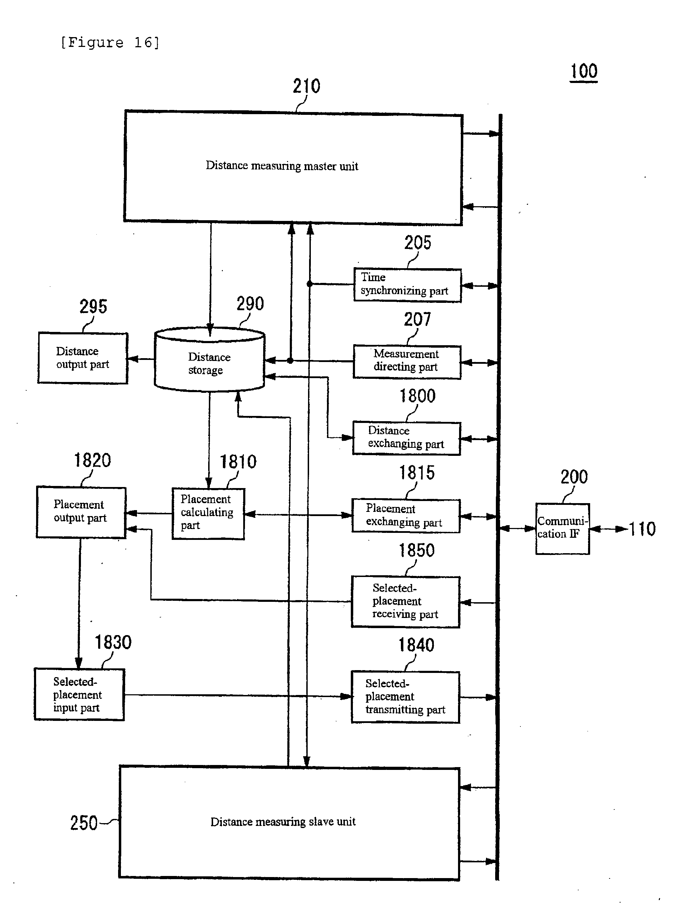

Figure 16 shows a configuration of an information processing apparatus 100 according to a sixthvariation of the present embodiment. The information processing apparatus 100 according to this variation calculates the placement of information processing apparatuses 100 in the vicinity on the basis of distances calculated and provides it to a user. In Figure 16, the components labeled with the same reference numerals as those in Figure 2 have the same functionality and configurations as those in Figure 2 and therefore the description of which, except for differences, will be omitted.

The information processing apparatus 100 according to this variation further includes a distance exchanging part 1800, a placement calculating part 1810, a placement exchanging part 1815, a placement output part 1820, a selected-placement input part 1830, a selected-placement transmitting part 1840, and a selected-placement receiving part 1850. The distance exchanging part 1800 exchanges distance information stored in a distance storage 290 with another information processing apparatus 100. The placement calculating part 1810 calculates the special placement of the local information processing apparatus 100 and nearby information processing apparatuses 1100 on the basis of the distances between the local information processing apparatus 100 and the nearby information processing apparatuses 100 and the distances between that other information processing apparatus 100 and the nearby information processing apparatuses 100.

The placement exchanging part 1815 exchanges information about the spatial placement of the local information processing apparatus 100 and the nearby information processing apparatuses 100 with that other information processing apparatus 100. The placement output part 1820 outputs spatial placement of the local information processing apparatus 100 and the nearby information processing apparatuses 100, for example in the form of display to a user of the information processing apparatus 100. The selected-placement input part 1830 allows the user to select any of the placement presented to the user by the placement output part 1820. The selected-placement transmitting part 1840 transmits the placement selected by the user to another information processing apparatus 100. The selected-placement receiving part 1850 receives a selected placement from another information processing apparatus 100. In response to this, the placement output part 1820 first presents the selected placement received from that other information processing apparatus 100 to the user under a predetermined condition.

The distance exchanging part 1800, placement calculating part 1810, placement exchanging part 1815, placement output part 1820, selected placement input part 1830, a selected-placement transmitting part 1840, and selected-placement receiving part 1850 may be provided in any of the information processing apparatuses 100 shown in Figures 9, 11, and 14.

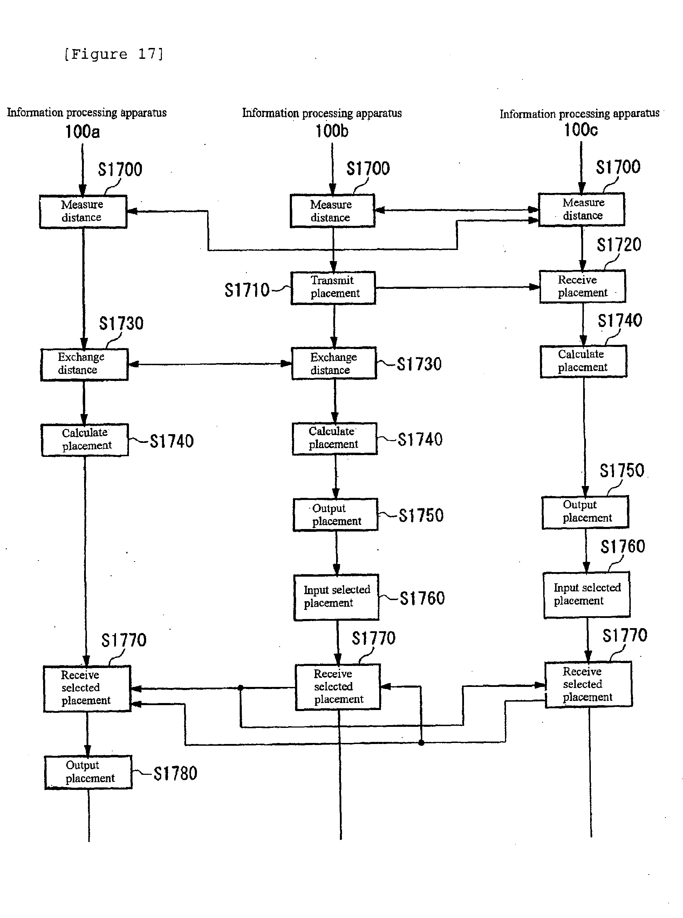

Figure 17 shows an operation flow in information processing apparatuses 100 according to the sixth variation of the present embodiment. Information processing apparatuses 100a and 100b belong to a communication group, which is a group of information processing apparatuses 100 formed temporarily for communicating among them. It is assumed that the information processing apparatuses 100a - 100b have already measured the distance between them and have calculated the placement of them.

First, an information processing apparatus 100c that wants to newly join the communication group of the information processing apparatuses 100a and 100b requests, as the requesting information processing apparatus 100, information processing apparatuses 100a and 100b to measure the distances (S1700). In response to this, each of the informationprocessing apparatuses 100a and 100bmeasures the distance to the information processing apparatus 100c and stores its distance storage 290 and also returns the distance to the information processing apparatus 100c (S1705). The information processing apparatus 100c stores the distances in its distance storage 290. The information processing apparatuses 100a and 100b transmits the identification information (ID) of the group to which they belong to the information processing apparatus 100c at step S1700 along with the distance measurement.

Then, the placement exchanging part 1815 of any of the information processing apparatuses 100 (for example information processing apparatus 100b) in the communication group already formed transmits information about the spatial placement of the information processing apparatuses 100 in the communication group to the information processing apparatus 100c that wants to newly join the communication group (S1710). The placement exchanging part 1815 of information processing apparatus 100c receives the placement information and provides it to the placement calculating part 1810 (S1720). The spatial placement is information indicating the position of each information processing apparatus 100 in the real two- or three-dimensional space. The positions of the information processing apparatuses 100 in the space may be expressed by the x, y coordinates or x, y, z, coordinates. Alternatively, the positions of the information processing apparatuses 100 in the space may be expressed by the positions or numbers of square or hexagonal cells into which the space is divided based on the precision of distance measurement.

Then, the distance exchanging parts 1800 of information processing apparatuses 100a and 100b exchange the distance information with the other information processing apparatuses 100 (S1730). In particular, the distance exchanging part 1800 of the information processing apparatus 100a obtains from at least one (for example information processing apparatus 100b) of the other information processing apparatuses 100 in the vicinity the distance between that other information processing apparatus 100b and another information processing apparatus (for example information processing apparatus 100c). Similarly, the distance exchanging part 1800 of the information processing apparatus 100b obtains from at least one (for example information processing apparatus 100a) of the other information processing apparatuses 100 the distance between that other information processing apparatus 100a and another information processing apparatus (for example information processing apparatus 100c).

Then, the placement calculating part 1810 of each of information processing apparatuses 100a - 100c calculates the placement of the information processing apparatuses 100 including the information processing apparatus 100c that wants to newly join the communication group (S1740). In particular, the placement calculating part 1810 of information processing apparatus 100a calculates the placement of information processing apparatus 100a and other information processing apparatuses 100 (for example information processing apparatuses 100b and 100c) on the basis of the distances to the other information processing apparatuses 100 that are calculated by the distance calculating part 258 in the distance measuring slave 250 (for example the distances between information processing apparatus 100a and information processing apparatuses 100b and 100c) and the distance (for example the distance between information processing apparatus 100b and information processing apparatus 100c) obtained by the distance exchanging part 1800. For example, the placement calculatingpart 1810 calculates the spatial placement of information processing apparatuses 100a - 100c from the distance between information processing apparatuses 100a and 100b, the distance between information processing apparatuses 100a and 100c, and the distance between information processing apparatuses 100b and 100c. Similarly, the placement calculating part 1810 of information processing apparatus 100b calculate the spatial placement of information processing apparatuses 100a - 100c.

The placement calculating part 1810 in the information processing apparatus 100c calculates the position of the information processing apparatus 100c on the basis of the position of each information processing apparatus 100 included in information received and the distance to each information processing apparatus 100 received at step S1700. That is, the information processing apparatus 100c adds the position of the information processing apparatus 100c to the placement of the information processing apparatuses 100 obtained to obtain the placement of the information processing apparatuses 100a - 100c.

At step S1740, the placement calculating part 1810 may calculate more than one placements of the local information processing apparatus 100 and the other information processing apparatuses 100. For example, the information processing apparatuses 100 can calculate two placements that are the symmetrical mirror images of each other in a two-dimensional space based on the distances between the information processing apparatuses 100. In Figure 17 in which the three information processing apparatuses 100a - 100c are provided, two placements can be provided: a placement in which information processing apparatuses 100a, 100b, and 100c are positioned clockwise in that order and a placement in which they are positioned anticlockwise. Because the placement calculating part 1810 cannot determine which of the placements is proper only from distance information, the placement calculating part 1810 provides both of the placements.

Then, the placement output part 1820 of information processing apparatus 100c presents the multiple placements calculated to the user of information processing apparatus 100c (S1750). In this example, the placement output part 1820 of information processing apparatus 100b also present the multiple placements calculated to the user of the information processing apparatus 100b.

Then, theselectedplacementinputpart 1830 of each of the information processing apparatuses 100b and 100c prompts the user of each information processing apparatus 100b and 100c to select a proper one from among the multiple placements (S1760). The selected-placement transmitting part 1840 of the each of the information processing apparatuses 100b and 100c transmits the placement selected by the user of the information processing apparatus 100 from among the multiple placements to the other information processing apparatuses 100 (S1770). The selected-placement receiving part 1850 of each of the information processing apparatuses 100a - 100c receives the placement selected by the users of the other information processing apparatuses 100 from those other information processing apparatuses 100.

At step S1770, the information processing apparatus 100a, in which one or more of the placements have not been selected by the user of information processing apparatus 100a, receives the selected placement from the other information processing apparatuses 100. If information processing apparatus 100a receives the same selected placement from a predetermined number of other information processing apparatuses 100, the placement output part 1820 in information processing apparatus 100a presents the selected placements to the user of information processing apparatus 100 with focus on the same selected placement (S1780).

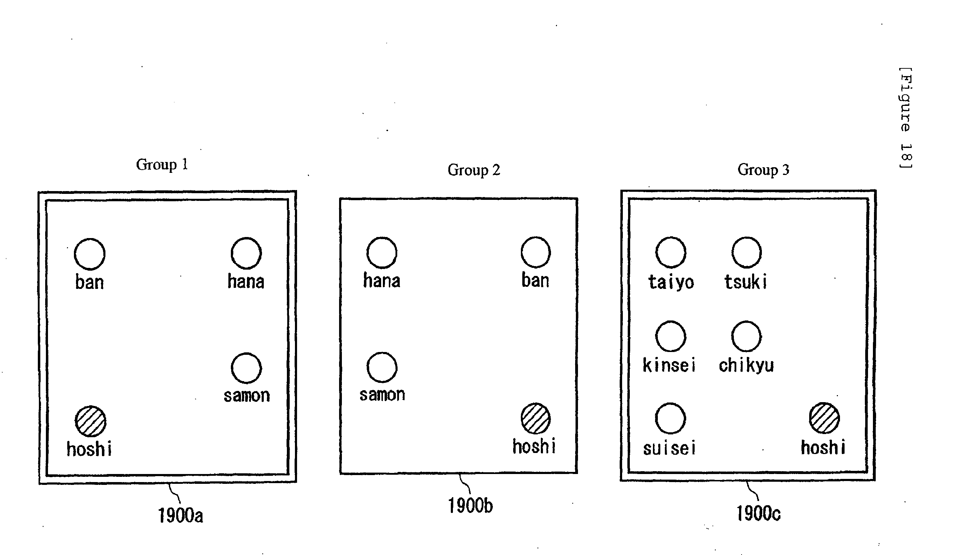

Figure 18 shows group placement views 1900 presented by the placement output part 1820 of the information processing apparatus 100a according to the sixth variation of the present embodiment. The information processing apparatus 100a presents to the user multiple placements of the information processing apparatus 100a and other information processing apparatuses 100 in each of groups consisting of the information processing apparatuses 100 located in the vicinity of the information processing apparatus 100a.

The placement output part 1820 of the information processing apparatus 100a presents the placements of the information processing apparatus 100a ("hoshi" in Figure 18) and the other information processing apparatuses 100 belonging to each of communication groups 1 and 2 as group placement views 1900a - 1900c. Group placement views 1900a and 1900b represent the multiple placements calculated for the same group 1. The placement output part 1820 presents the multiple placements calculated for the same communication group to the user, as shown in group placement views 1900a and 1900b.

At step S1770 in Figure 17, the information processing apparatus 100a has receivedselectedplacements from the informationprocessing apparatuses 100b and 100c before presenting the group placement views 1900a - 1900c. If the placement output part 1820 receives the same placement from a predetermined number (for example one or more) of other information processing apparatuses 100b - 100c, then the placement output part 1820 presents placements to the user of the information processing apparatus 100a with focus on that same placement among the multiple other placements. For example, the placement output part 1820 may highlight the outline of the placement to be presented with focus on it by using a double line as shown in Figure 18. Alternatively, the placement output part 1820 may enlarge, blink, or display in a different color the placement to be presented with focus on it. If the placement to be presented with focus on it has already been determined, the placement output part 1820 may display that determined placement alone without displaying the other placements.

According to the informationprocessing apparatus 100 described above, the placements of nearby information processing apparatuses 100 can be calculated from the distances measured and can be presented on a communication-group-by-group basis to each user. The user can select one of the multiple communication groups to join on the basis of the output placement . If multiple placements, which are the mirror images of each other for example, are calculated for the same communication group, the placement selected by the user of another information processing apparatus is presented with focus on it. Thus, the information processing apparatus 100 can make the placement that is considered to be proper known to the user to help the user select an appropriate communication group.

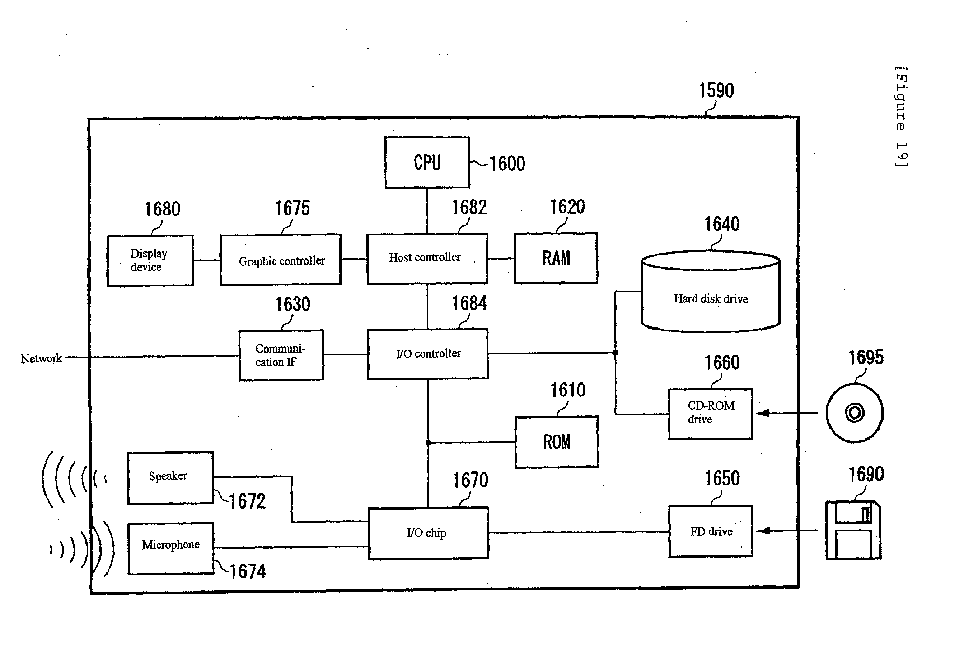

Figure 19 shows an exemplary hardware configuration of a computer 1590 according to the present embodiment. The computer 1590 according to the embodiment includes a CPU section including a CPU 1600, a RAM 1620, a graphic controller 1675, and display device 1680 interconnected through a host controller 1682, an input-output section including a communication interface 1630, a hard disk drive 1640, and a CD-ROM drive 1660, which are connected to the host controller 1682 through an input-output controller 1684, and a legacy input-output section including a ROM 1610, a flexible-disk drive 1650, an input-output chip 1670, a speaker 1672, and a microphone 1674, which are connected to the input/output controller 1684.

The host controller 1682 connects the RAM 1620 with the CPU 1600 and the graphic controller 1675, which access the RAM 1620 at higher transfer rates. The CPU 1600 operates according to programs stored in the ROM 1610 and the RAM 1620 to control components of the computer. The graphic controller 1675 obtains image data generated by the CPU 1600 or the like on a frame buffer provided in the RAM 1620 and causes it to be displayed on the display device 1680. Alternatively, the graphic controller 1675 may contain a frame buffer for storing image data generated by the CPU 1600 or the like.

The input/output controller 1684 connects the host controller 1682 with the communication interface 1630, the hard disk drive 1640, and the CD-ROM drive 1660, which are relatively fast input/output devices. The communication interface 1630 communicates with external devices through a network. The hard disk drive 1640 stores programs and data used by the CPU 1600 in the computer 1590. The CD-ROM drive 1660 reads a program or data from a CD-ROM 1695 and provides it to the hard disk drive 1640 through the RAM 1620.

Connected to the input/output controller 1684 are relatively slow devices such as the ROM 1610, the flexible disk drive 1650 and input-output chip 1670. The ROM 1610 stores a boot program executed by the computer 1590 duringboot-up and programs and the like dependent on the hardware of the computer 1590. The flexible-disk drive 1650 reads a program or data from a flexible disk 1690 and provides it to the hard disk drive 1640 through the RAM 1620. Connected to the input-output chip 1670 are a flexible disk 1690 and input-output devices through ports such as a parallel port, serial port, keyboard port, and mouse port, for example. The speaker 1672 outputs sound according to instructions from the CPU 1600. The microphone 1674 inputs sound according to instructions from the CPU 1600.

A program to be provided to the hard disk drive 1640 through the RAM 1620 is stored on a recording medium such as a flexible disk 1690, a CD-ROM 1695 , or an IC card and provided by a user. The program is read from the recording medium, installed in the hard disk drive 1640 in the computer 1590 through the RAM 1620, and executed in the CPU 1600.

The program installed in the computer 1590 and causes the computer 1590 to function as the information processing apparatus 100 shown in Figure 2 includes a time synchronizing module, a measurement directing module, a sound transmission timing transmitting module, a sound signal transmitting module, a distance receiving module, a sound transmission timing receiving module, a sound signal receiving module, a sound reception timing identifying module, a distance calculating module, a condition determining module, a distance transmitting module, and a distance outputting module. These programs or modules controls the CPU 1600 and other components to cause the computer 1590 to function as the time synchronizing part 205, measurement directing part 207, sound transmission timing transmitting part 212, sound signal transmitting part 214, distance receiving part 216, sound transmission timing receiving part 252, sound signal receiving part 254, sound reception timing identifying part 256, distance calculating part258,condition determiningpart 260, distance transmitting part 262, and distance outputting part 295.

The measurement directing module includes a re-measurement processing module and a distance delete requesting module. These programs or modules controls the CPU 1600 to cause the computer 1590 to function as the re-measurement processingpart 510 and the distance information delete requesting part 530.

The time synchronizing module may includes a mode switch directing packet transmitting module, a synchronization packet transmitting module, a wireless communication mode switching module, a synchronization packet receiving module, a reference time setting module, and a clocking module. These programs or modules controls the CPU 1600 to cause the computer 1590 to function as the mode switch directing packet transmitting part 700, synchronization packet transmitting part 710, wireless communication mode switching part 720, synchronization packet receiving part 730, reference time setting part 740,, and clocking part 750.

The program installed in the computer 1590 and causes the computer 1590 to function as the information processing apparatus 100 shown in Figure 9 includes a time synchronizing module, a measurement directing module, a sound transmission timing transmitting module, a sound signal transmitting module, a sound reception timing receiving module, a distance calculating module, a condition determining module, a sound transmission timing receiving module, a sound signal receivingmodule, a sound reception timing identifying module, a sound reception timing transmitting module, and a distance output module. These programs or modules controls the CPU 1600 or the like to cause the computer 1590 to function as the time synchronizing part 205, measurement directing part 207, sound transmission timing transmitting part 212, sound signal transmitting part 214, sound reception timing receiving part 900, distance calculating part 258, condition determining part 260, sound transmission timing receiving part 252, sound signal receiving part 254, sound reception timing identifying part 256, a sound reception timing transmitting part 910, and distance output part 295.

The program installed in the computer 1590 and causing the computer 1590 to function as the information processing apparatus shown in Figure 11 includes a time synchronizing module, a measurement directing module, a sound transmission request transmitting module, a sound signal receivingmodule, a sound reception timing identifying module, a distance calculating module, a condition determining module, a sound transmission request receiving module, a sound signal transmitting module, and a distance output module. These programs ormodules controls the CPU 1600 to cause the computer 1590 to function as the time synchronizing part 205, measurement directing part 207, sound transmission request transmitting part 1100, sound signal receiving part 254, sound reception timing identifying part 256, distance calculating part 258, condition determining part 260, sound transmission request receiving part 1110, sound signal transmitting part 214, and distance output part 295.

The time synchronizing module may include a mode switch directing packet transmitting module, a synchronization packet transmitting module, a wireless communication mode switching module, a measurement start directing module, a referenced time setting module, and a clocking module. These programs or modules controls the CPU 1600 to cause the computer 1590 to function as the mode switch directing packet transmitting part 700, synchronization packet transmitting part 710, wireless communication mode switching part 720, measurement start directing part 1300, reference time setting part 740, and clocking part 750.
The program installed in the computer 1590 and causing the computer 1590 to function as the information processing apparatus shown in Figure 14 includes a measurement directing module, a first-sound-signal transmitting module, a second-sound-signal receiving module, a sound reception timing identifying module, a distance calculating module, a condition determining module, a first-sound-signal receiving module, a sound signal processing module, a second-sound-signal transmitting module, and a distance output module. These programs or modules controls the CPU 1600 to cause the computer 1590 to function as the measurement direction part 207, first-sound-signal transmitting part 1400, second-sound-signal receiving part 1410, sound reception timing identifying part 256, distance calculating part 258, condition determining part 260, first-sound-signal receiving part 1420, sound signal processing part 1430, second-sound-signal transmitting part 1440, and distance output part 295.

The programs or modules provided above may be stored in an external storage medium. The storage medium may be a flexible disk 1690 or a CD-ROM 1695, or an optical recording medium such as a DVD and CD, a magneto-optical recording medium such as an MO, a tape medium, or a semiconductor memory such as an IC card. Alternatively, a storage device such as a hard disk or a RAM provided in a server system connected to a private communication network or the Internet may be used as the recording medium and the programs or modules may be provided from the storage device to the computer 1590 over the network.

While the present invention has been descried with respect to embodiments thereof, the technical scope of the present invention is not limited to that described with the embodiments. It will be apparent to those skilled in the art that various modifications or improvements can be made to the embodiment. It will be apparent from the Claims that embodiments to which such modifications and improvements are made also fall within the scope of the technical scope of the present invention.
For example, the information processing apparatuses 100 may have at least two of a first measurement mode in which an NTP server 120 is used to synchronize reference times to measure distances, a second measurement mode in which a synchronization packet is directly exchanged by wireless to synchronize reference times to measure distances as shown in Figure 8, and a third measurement mode in which distances are measured by using the method shown in Figure 15 and may use one of these modes appropriate to the type of a communication network used.

For example, information processing apparatuses 100 may use the first measurement mode if an NTP server 120 is connected to the local area network and use the second or third measurement mode if it is not connected. If both requesting and responding information processing apparatuses 100 have wireless communication interfaces, they may use the second measurement mode. If at least one of them does not have a wireless communication network, they may use the first or third measurement mode.

If information processing apparatuses 100 contain means for synchronizing to an absolute time, such as a GPS clock or a radio controlled clock, they may use such means instead of an NTP sever 120 as time synchronizing means. In particular, the time synchronizing part 205 in each information processing apparatus 100 may synchronize the internal clock to a signal received from satellites to synchronize the time on the information processing apparatus 100 and the other information processing apparatuses 100, or may receive a radio wave containing time information and synchronize the internal clock to it to synchronize the time on the information processing apparatus 100 and the other information processing apparatuses 100.

If the information processing apparatuses 100 are mobile phones, each of the information processing apparatuses 100 may use a base station as an NTP server 120 to synchronize the time.

Furthermore, multiple information processing apparatuses 100 may exchange distance information stored in their distance storages 290 to determine the position of each of the information processing apparatuses 100 on the basis of the distance between them.

## Claims

1. An information processing apparatus which measures the distance between said information processing apparatus and another information processing apparatus in response to a request from said another information processing apparatus, said information processing apparatus comprising:
a time synchronizing part for synchronizing the reference time of the information processing apparatus with the reference time of said another information processing apparatus, said reference time being used for measuring said distance;
a sound signal receiving part for receiving a sound signal transmitted by said another information processing apparatus at a sound transmission timing determined on the basis of said reference time of said another information processing apparatus;
a sound transmission timing receiving part for receiving said sound transmission timing from said another information processing apparatus;
a sound reception timing identifying part for, on the basis of said reference time of saidinformationprocessingapparatus, identifying the sound reception timing at which said sound signal receiving part has received said sound signal; and
a distance calculatingpart for calculating the distance between said another information processing apparatus and said information processing apparatus on the basis of said sound transmission timing received from said another information processing apparatus and said sound reception timing.

2. The information processing apparatus according to Claim 1, further comprising:
a distance storage for storing the distance calculated by said distance calculating part, in association with said another information processing apparatus; and
a distance transmitting part for transmitting the distance calculated by said distance calculating part to said another information processing apparatus.

3. The information processing apparatus according to Claim 2, further comprising a condition determining part for determining whether said distance calculated by said distance calculatingpart is less than or equal to a predetermined maximum distance;
wherein said distance transmitting part transmits said distance to said another information processing apparatus if said distance is less than or equal to said maximum distance.

4. The information processing apparatus according to Claim 2,
wherein:
said distance calculating part calculates sound propagation time taken for said sound signal to propagate from said another information processing apparatus to said information processing apparatus, on the basis of said sound transmission timing and said sound reception timing;
said information processing apparatus further comprises a condition determining part for determining whether said sound propagation time is less than or equal to a predeterminedmaximum propagation time; and
said distance transmitting part transmits said distance to said another information processing apparatus if said sound propagation time is less than or equal to said maximum propagation time.

5. The information processing apparatus according to Claim 2, further comprising:
an acceleration sensor for sensing movement of said information processing apparatus; and
a re-measurement processing part for deleting said distance stored in said distance storage in association with said another information processing apparatus, if movement of said information processing apparatus is sensed by said acceleration sensor.

6. The information processing apparatus according to Claim 2, further comprising:
a main unit having a keyboard which accepts key inputs from a user;
a lid unit having a display which presents information to the user and making said keyboard and said display unavailable to the user when being in a close position with respect to said main unit and making said keyboard and said display available to the user when being in an open position with respect to said main unit;
an open and close detecting part for detecting whether said lid unit is in the closed position with respect to said main unit; and
a distance information delete requesting part for requesting said another information processing apparatus to delete information about the distance between said information processing apparatus and said another information processing apparatus that is stored in said another information apparatus, if said lid unit is in a closed position with respect to said main unit.

7. The information processing apparatus according to Claim 2, wherein said sound signal receiving part listens for said sound signal during a predetermined time period including a timing specified by said sound transmission timing received by said sound transmission timing receiving part; and
said distance transmitting part notifies said another information processing apparatus that said sound signal has not been received, if said sound signal has not been received in said predetermined time period.

8. The information processing apparatus according to Claim 1, wherein:
said another information processing apparatus and said information processing apparatus are connected to a wireless communication network on which wireless communications are relayed by a base station;
said time synchronizing part includes:
a wireless communication mode switching part for switching the wireless communication mode of said information processing apparatus from a first wireless communication mode in which a wireless communication packet transmitted from said another information processing apparatus is received through the intermediary of said base station to a second wireless communication mode in which a wireless communication packet is received directly from said another information processing apparatus without intermediary of said base station, if a synchronization start packet indicating the start of a process for synchronizing the reference time of said another information processing apparatus with the reference time of said information processing apparatus is received from said another information processing apparatus;
a synchronization packet receiving part for receiving in said second wireless communication mode a synchronization wireless communication packet transmitted by said another information processing apparatus directly from said another information processing apparatus; and
a reference time setting part for setting said reference time of said information processing apparatus on the basis of the time at which said synchronization wireless communication packet has been received; and
said sound transmission timing receiving part receives said sound transmission timing based on said reference time set by said another information processing apparatus on the basis of the time at which said synchronization wireless communication packet has been transmitted from said another information processing apparatus.

9. The information processing apparatus according to Claim 8, wherein said wireless communication mode switching part switches the wireless communication mode of said information processing apparatus to said first wireless communication mode if said synchronization wireless communication packet is not received in a predetermined timeout period since the reception of said synchronization start packet.

10. The information processing apparatus according to Claim 1, wherein a local area network interconnecting said information processing apparatus and said another information processing apparatus has an NTP (Network Time Protocol) server;
said another information processing apparatus synchronizes the time clocked by said another information processing apparatus to the time clocked by said NTP server and set the time as said reference time of said another information processing apparatus; and
said time synchronizing part synchronizes the time clocked by said information processing apparatus to the time clocked by said NTP server and sets the time as said reference time of said information processing apparatus to synchronize said reference time of said information processing apparatus with said reference time of said another information processing apparatus.

11. The information processing apparatus according to Claim 10, wherein said time synchronizing part obtains the time clocked by said NTP server and synchronizes the time clocked by said information processing time to said obtained time, if said sound transmission timing receiving part receives said sound transmission timing; and
said sound signal receiving part receives said sound signal after the time clocked by said information processing apparatus is synchronized with said time.

12. An information processing apparatus which measures the distance between said information processing apparatus and another information processing apparatus, said information processing apparatus comprising:
a time synchronizing part for synchronizing the reference time of the information processing apparatus with the reference time of said another information processing apparatus, said reference time being used for measuring said distance;
a sound signal transmitting part for transmitting a sound signal to said another information processing apparatus at a sound transmission timing determined on the basis of said reference time;
a sound reception timing receiving part for receiving a sound reception timing at which said sound signal has been received and which has been identified by said another information processing apparatus on the basis of said reference time from said another information processing apparatus; and
a distance calculatingpart for calculating the distance between said information processing apparatus and said another information processing apparatus on the basis of said sound transmission timing and said sound reception timing received from said another information processing apparatus.

13. The information processing apparatus according to Claim 12, further comprising:
a distance exchanging part for obtaining from at least one of a plurality of other information processing apparatuses the distance between said other information processing apparatus and another information processing apparatus among said plurality of other information processing apparatus; and
a placement calculating part for calculating the placement of said information processing apparatus and said plurality of other information processing apparatuses on the basis of the distances to said plurality of other information processing apparatuses calculated by said distance calculating part and the distance obtained by said distance exchanging part.

14. The information processing apparatus according to Claim 13, wherein:
said placement calculating part calculates a plurality of placements of said information processing apparatus and said plurality of other information processing apparatuses;
said information processing apparatus further comprises:
a selected placement transmitting part for transmitting a one of said plurality of placements that is selected by a user of saidinformationprocessingapparatus tosaidpluralityof other information processing apparatuses;
a selected placement receiving part for receiving one of said placements that is selected by a user of said other information processing apparatus from each of said plurality of other information processing apparatuses; and
a placement output part for, if the same placement is received fromapredeterminednumber of said other information processing apparatus in a state where the user of said information processing apparatus has not selected any of said placements, outputting said plurality of placements to the user of said information processing apparatus with focus on the same placement.

15. An information processing apparatus which measures the distance between said information processing apparatus and another information processing apparatus, comprising:
a time synchronizing part for synchronizing the reference time of said information processing apparatus with the reference time of said another information processing apparatus, said reference time being used for measuring said distance;
a sound transmission request transmitting part for transmitting a sound transmission request to said another information processing apparatus for requesting said another information processing apparatus to transmit a sound signal at a sound transmission timing determined on the basis of said reference time;
a sound signal receiving part for receiving the sound signal transmitted at said sound transmission timing by said another information processing apparatus;
a sound reception timing identifying part for identifying the sound signal reception timing at which said sound signal receiving part has received said sound signal, on the basis of said reference time of said informationprocessing apparatus ; and
a distance calculating part for calculating the distance between said information processing apparatus and said another information processing apparatus on the basis of said sound transmission timing and said sound reception timing at which said sound signal has been received from said another information processing apparatus.

16. The information processing apparatus according to Claim 15, wherein said another information processing apparatus and said information processing apparatus are connected to a wireless communication network on which wireless communications are relayed by a base station, and
said time synchronizing part comprises:
a mode switch directing packet transmitting part for directing that the wireless communication mode of said another information processing apparatus is switched from a first wireless communication mode in which a wireless communication packet transmitted from said information processing apparatus is received through said base station to a second wireless communication mode in which a wireless communication packet is received directly from said information processing apparatus without intermediary of said base station;
a wireless communication mode switching part for switching the wireless communication mode of said information processing apparatus from said first wireless communication mode to said second wireless communication mode;
a measurement start directing part for causing said sound transmission request transmitting part to use said second wireless communicationmode to transmit said sound transmission request and causing said another information processing apparatus to set said reference time of said another information processing apparatus on the basis of the time at which said another information processing apparatus has received said sound transmission request; and
a reference time setting part for setting said reference time of said information processing apparatus on the basis of the time at which said sound transmission request has been transmitted.

17. An information processing apparatus which measures the distance between said information processing apparatus and another information processing apparatus, comprising:
a sound signal transmitting part for transmitting a first sound signal to said another information processing apparatus;
a sound signal receiving part for receiving a second sound signal that is transmitted after a predetermined delay time elapses since the reception of said first sound signal by said another information processing apparatus;
a delay time storage part for storing said delay time; and
a distance calculatingpart for calculating the distancebetween said information processing apparatus and said another information processing apparatus on the basis of the sound transmission timing at which said first sound signal has been transmitted and the sound reception timing at which said second sound signal has been received and said delay time.

18. The information processing apparatus according to Claim 17,
wherein said another information processing apparatus
receives said first sound signal;
extracts identification information identifying said first sound signal from said first sound signal;
generates reply data containing the identification information of said first sound signal and identification information identifying said another information processing apparatus;
converts said reply data into sound and transmits said sound as said second sound signal; and
stores said delay time that is greater than or equal to the time required from the reception of said first sound signal by said another information processing apparatus until the transmission of said second sound signal by said another information processing apparatus.

19. The information processing apparatus according to Claim 17, further comprising a sound processing time storage for storing sound transmissionprocessing time that elapses from a direction to said sound signal transmitting part to transmit said first sound signal until the transmission of said first sound signal and sound reception processing time that elapses from the reception of said second sound signal by said sound signal receiving part until notification of the reception of said second sound signal,
wherein said distance calculating part obtains said sound transmission timing by adding said sound transmission processing time to the timing at which said sound signal transmitting part has received the direction to transmit said first sound signal and obtains said sound reception timing by subtracting said sound reception processing time from the time at which said sound signal receiving part has notified of the reception of said second sound signal.

20. The information processing apparatus according to Claim 17,
wherein said sound signal transmittingpart transmits said first signal in at least one of a plurality of time slots preset in common in said information processing apparatus and said another information processing apparatus if a request for measuring said distance is received; and
said another information processing apparatus detects whether said another information processing apparatus receives said first sound signal in each of said plurality of time slots and does not detect whether said another information processing apparatus receives said first sound signal in time slots that do not belong to any of said plurality of time slots.

21. A distance measuring system for measuring the distance between a first information processing apparatus and a second information processing apparatus, said distance measuring system comprising:
a time synchronizing part for synchronizing the reference time of said first information processing apparatus with the reference time ofsaidsecondinformation processing apparatus, said reference time being used for measuring said distance;
a sound signal transmittingpart for transmitting a sound signal from said first information processing apparatus to said second informationprocessing apparatus in a state where said reference time of said first information processing apparatus and said reference time of said second information processing apparatus is in synchronization with each other; and
a distance calculatingpart for calculating the distance between said first information processing apparatus and said second information processing apparatus on the basis of the sound transmission timing that is determined on the basis of said reference time of said first information processing apparatus and at which said sound signal has been transmitted and the sound reception timing at which said sound signal has been received and which is identified by said second information processing apparatus on the basis of said reference time.

22. The distance measuring system according to Claim 21, wherein
said first information processing apparatus comprises:
a sound transmission timing transmitting part for transmitting said sound transmission timing to a plurality of said second information processing apparatuses; and
said sound signal transmitting part for transmitting said sound signal at said sound signal transmission timing; and
each of said second information processing apparatuses comprises:
a sound transmission timing receiving part for receiving said sound transmission timing from said first information processing apparatus;
a sound signal receiving part for receiving said sound signal from said first information processing apparatus;
a sound reception timing identifying part for identifying said sound signal reception timing at which said sound signal receiving part has received said sound signal, on the basis of said reference time of said second information processing apparatus;
said distance calculating part for calculating said distance on the basis of said sound transmission timing received from said first information processing apparatus and said sound reception timing identified by said sound reception timing identifying part;
a distance storage for storing the distance calculated by said distance calculating part in association with said first information processing apparatus; and
a distance transmitting part for transmitting the distance calculated by said distance calculating part to said first information processing apparatus through a communication network.

23. A distance measuring system including first and second information processing apparatuses and measuring the distance between said first information processing apparatus and said second information processing apparatus, wherein
said first information processing apparatus comprises:
a sound signal transmitting part for transmitting a first sound signal to said second information processing apparatus;
a sound signal receivingpart for receiving a second sound signal to be transmitted after a predetermined delay time elapses since the reception of said first sound signal by said second information processing apparatus;
a delay time storage part for storing said delay time; and
a distance calculatingpart for calculating the distance between said first information processing apparatus and said second information processing apparatus on the basis of the sound transmission timing at which said first sound signal has been received, the sound reception timing at which said second sound signal has been received, and said delay time; and
said second information processing time comprises:
a sound signal receiving part for receiving said first sound signal; and
a sound signal transmitting time for transmitting said second sound signal after said delay time elapses since the reception of said first sound signal.

24. A distance measuring method for measuring the distance between a first information processing apparatus and a second information processing apparatus by using a distance measuring system, said method comprising:
a time synchronizing step of synchronizing the reference time of said first information processing apparatus with the reference time of said second information processing apparatus said reference time being used for measuring said distance;
a sound signal transmitting step of transmitting a sound signal from said first information processing apparatus to said second informationprocessing apparatus inastatewheresaidreference time of said first information processing apparatus and said reference time of said second information processing apparatus is in synchronization with each other; and
a distance calculating step of calculating the distance between said first information processing apparatus and said second information processing apparatus on the basis of the sound transmission timing that is determined on the basis of said reference time of said first information processing apparatus and at which said sound signal has been transmitted and the sound reception timing at which said sound signal has been received and which is identified by said second information
processing apparatus on the basis of said reference time.

25. A dis tance measuring methodwhich uses distance measuring system including first and second information processing apparatuses and measuring the distance between said first information processing apparatus and said second information processing apparatus, said method comprising:
a sound signal transmitting step of transmitting a first sound signal from said first information processing apparatus to said second information processing apparatus;
a sound signal receiving step of receiving said first sound signal by said second information processing apparatus;
a sound signal transmitting step of transmitting a second signal by said second information processing apparatus after a predetermined delay time elapses since the reception of said first sound signal;
a sound signal receiving step of receiving by said first information processing apparatus said second sound signal transmitted from said second information processing apparatus after said delay time elapses since the reception of said first sound signal;
a delay time storing step of storing said delay time by said first information processing apparatus; and
a distance calculating step of calculating the distance between said first information processing apparatus and said second information processing apparatus by said first information processing apparatus on the basis of the sound transmission timing at which said first sound signal has been transmitted, the sound reception timing at which said second sound signal has been received, and said delay time.

26. A program for an information processing apparatus which measures the distance between said information processing apparatus and another information processing apparatus in response to a request from said another information processing apparatus, said program causing said information processing apparatus to function as:
a time synchronizing part for synchronizing the reference time of the information processing apparatus with the reference time of said another information processing apparatus, said reference time being used for measuring said distance;
a sound signal receiving part for receiving a sound signal transmitted by said another information processing apparatus at a sound transmission timing determined on the basis of said reference time of said another information processing apparatus;
a sound transmission timing receiving part for receiving said sound transmission timing from said another information processing apparatus;
a sound reception timing identifying part for identifying the sound reception timing at which said sound signal receiving part has received said sound signal, on the basis of said reference time of said information processing apparatus; and
a distance calculatingpart for calculating the distance between said information processing apparatus and said another information processing apparatus on the basis of said sound transmission timing received from said another information processing apparatus and said sound reception timing.

27. A program for an informationprocessing apparatus whichmeasures the distance between said information processing apparatus and another information processing apparatus, said program causing said information processing apparatus to function as:
a time synchronizing part for synchronizing the reference time of the information processing apparatus with the reference time of said another information processing apparatus, said reference time being used for measuring said distance;
a sound signal transmitting part for transmitting a sound signal to said another information processing apparatus at a sound transmission timing determined on the basis of said reference time;
a sound reception timing receiving part for receiving a sound reception timing at which said sound signal has been received and which has been identified by said another information processing apparatus on the basis of said reference time; and
a distance calculating part for calculating the distance between said information processing apparatus and said another information processing apparatus on the basis of said sound transmission timing and said sound reception timing received from said another information processing apparatus.

28. A program for an informationprocessing apparatus whichmeasures the distance between said information processing apparatus and another information processing apparatus, said program causes said information processing apparatus to function as:
a time synchronizing part for synchronizing the reference time of said information processing apparatus with the reference time of said another information processing apparatus, said reference time being used for measuring said distance;
a sound transmission request transmitting part for transmitting a sound transmission request to said another information processing apparatus for requesting said another information processing apparatus to transmit a sound signal at a sound transmission timing determined on the basis of said reference time;
a sound signal receiving part for receiving the sound signal transmitted at said sound transmission timing by said another information processing apparatus;
a sound reception timing identifying part for identifying on the basis of said reference time of said information processing apparatus the sound reception timing at which said sound signal receiving part has received said sound signal; and
a distance calculatingpart for calculating the distance between said information processing apparatus and said another information processing apparatus on the basis of said sound transmission timing and said sound reception timing at which said sound signal has been received from said another information processing apparatus.

29. A program for an information processing apparatus which measures the distance between said information processing apparatus and another information processing apparatus, said program causing said information processing apparatus to function as:
a sound signal transmitting part for transmitting a first sound signal to said another information processing apparatus;
a sound signal receivingpart for receiving a second sound signal that is transmitted after a predetermined delay time elapses since the reception of said first sound signal by said another information processing apparatus;
a delay time storage part for storing said delay time; and
a distance calculatingpart for calculating the distancebetween said information processing apparatus and said another information processing apparatus on the basis of the sound transmission timing at which said first sound signal has been transmitted and the sound reception timing at which said second sound signal has been received and said delay time.

30. A computer-readable recordingmedium on which any of the programs according to Claims 26 to 29 is recorded.
